# EUROPÄISCHE PATENTSCHRIFT

(11) **EP 1 950 639 B1**
(45) Veröffentlichungstag und Bekanntmachung des Hinweises auf die Patenterteilung: **29.05.2013**
(21) Anmeldenummer: 07001419.6
(22) Anmeldetag: 23.01.2007
(51) Int. Cl.: G05B 23/02

(54) **Verfahren zum Betreiben einer Prozessanlage, Prozessanlage und Computerprogrammprodukt**
Method for operating a process plant, process plant and computer program product
Procédé destiné au fonctionnement d'une installation de processus, installation de processus et produit de programme informatique

(43) Veröffentlichungstag der Anmeldung: 30.07.2008
(73) Patentinhaber: Siemens Aktiengesellschaft, 80333 München (DE)
(72) Erfinder: Thurau, Oliver, 67117 Limburgerhof (DE)

(56) Entgegenhaltungen:
- WO-A-2006/000110

## Beschreibung

Die vorliegende Erfindung betrifft ein Verfahren nach dem Oberbegriff des Patentanspruchs 1 zum Betreiben einer Prozessanlage, bei der auf Prozessebene eine Anzahl von Alarminformationen zum Anzeigen nicht ordnungsgemäßer Betriebsvorgänge der Prozessanlage generiert wird.

Weiterhin betrifft die vorliegende Erfindung eine Prozessanlage nach dem Oberbegriff des Patentanspruchs 19 mit einer Anzahl von Alarmgebern auf Prozessebene, die zum Generieren einer Anzahl von Alarminformationen zum Anzeigen nicht ordnungsgemäßer Betriebsvorgänge der Prozessanlage ausgebildet sind, und mit einer Alarmanzeigeeinrichtung zum Anzeigen von Alarminformationen.

Darüber hinaus betrifft die vorliegende Erfindung ein Computerprogrammprodukt zum Betreiben einer Prozessanlage.

In der Leittechnik von Prozessanlagen, beispielsweise in der Chemieindustrie, der Pharmaindustrie oder der Öl-/Gasindustrie, werden regelmäßig Automatisierungssysteme eingesetzt, die im Falle nicht ordnungsgemäßer Betriebsvorgänge der Prozessanlage, wie Druckabfällen, Temperaturerhöhungen oder dergleichen, eine große Menge an Alarminformationen generieren und an einen Anlagenbediener (Operator) weiterleiten. Dies kann in bestimmten Situationen, beispielsweise beim Abschalten einer Prozessanlage oder bei einer Auswahl bestimmter Schlüsselkomponenten der Prozessanlage, zu einer Flut systemgenerierter Alarme führen, die vom Operator nicht mehr beherrschbar bzw. überschaubar ist, woraus gegebenenfalls schwerwiegende Unfälle resultieren können.

Des Weiteren hat sich herausgestellt, dass die in einer Prozessanlage generierten Alarminformationen bestimmte Abhängigkeiten voneinander aufweisen. So führen beispielsweise bestimmte nicht ordnungsgemäße Betriebsvorgänge kausal zum Erzeugen eines ersten Alarms, dessen Auftreten anschließend unausweichlich mit einem Schwall von so genannten Folgealarmen ("Meldeschwall") verknüpft ist. Derartige Folgealarme bieten dem Operator keinen echten zusätzlichen Informationsgehalt, sondern sind unter Umständen nicht mehr beherrschbar, was zu unerwünschten Anlagenabschaltungen und schlimmstenfalls ebenfalls zu schwerwiegenden Unfällen führen kann.

Ein konkretes Beispiel für das Entstehen derartiger Folgealarme betrifft den Ausfall der Netzwerkkarte in einem Automatisierungsgerät, welches Teil einer Prozessanlage ist. Hierbei wird unmittelbar ein Alarm generiert, welcher den Ausfall der Netzwerkverbindung für das Automatisierungsgerät anzeigt. Da das Automatisierungsgerät aufgrund des Wegfalls seiner Netzwerkanbindung in der Folge keine Daten, wie Temperatur- oder Druckdaten, an die restliche Prozessanlage übertragen kann, wird anschließend, d. h. in der Folge, eine ganze Reihe von Folgealarmen generiert werden, welche das Ausbleiben oder die Fehlerhaftigkeit der genannten Daten anzeigen. Allerdings bieten derartige Folgealarme - wie bereits erwähnt - für den Operator keinen Informationsgewinn, zumal sie zusammen mit ihrer Ursache wegfallen, wenn die auslösende Fehlerursache, d. h. vorliegend die fehlerhafte Netzwerkanbindung, behoben ist.

Internationale Verbände, wie beispielsweise NAMUR (www.namur.de) oder EEMUA (www.eemua.co.uk) verlangen daher in der Leittechnik von Prozessanlagen Lösungen, die in der Lage sind, in Abhängigkeit vom Anlagenzustand und der Kombination von anstehenden Alarmen bestimmte Alarme zu aktivieren bzw. zu deaktivieren (so genannte dynamische Alarmverarbeitung). Dies soll zu einer Reduktion des Alarmaufkommens führen und damit eine generelle Wiederherstellung der Anlagensicherheit ermöglichen.

Aus dem Stand der Technik ist in diesem Zusammenhang zunächst die Filterung von Alarmen direkt an der Alarmquelle, d. h. auf Prozessebene, durch den Einbau einer entsprechenden Logik bekannt. Bei einer derartigen Lösung ist besonders als nachteilig anzusehen, dass eine Fehlerrückverfolgbarkeit nicht mehr gegeben ist. An der Quelle gefilterte Alarme können nicht archiviert werden und stehen somit nicht für spätere Analysen oder statistische Auswertungen auf Prozessleitebene zur Verfügung.

Darüber hinaus sind so genannte Alarm-Management-Systeme in Form von designierten, unabhängigen Systemen für das Alarmhandling von Prozessanlagen bekannt. Da sie eigenständig und unabhängig vom Leitsystem der Prozessanlage arbeiten, erfordern sie entsprechende zusätzliche Aufmerksamkeit durch den Anlagenoperator. Des Weiteren bieten derartige unabhängige Systeme nicht den Komfort einer in den Anlagenbetrieb integrierten Lösung und sind darüber hinaus nicht in der Lage, Änderungen der Anlagenleittechnik automatisch zu berücksichtigen, da insbesondere eine getrennte Datenhaltung und ein getrenntes Engineering erfolgen.

Aus der WO 2006/000110 A1 ist ein Verfahren zur Unterdrückung von redundanten Alarmen bekannt, bei welchem eine Prozessoreinheit sowie eine Fehlerdiagnose- und Isolierungseinheit Eingangssignale von Sensoren eines zu überwachenden Systems empfangen. Die Prozessoreinheit stellt Abnormalitäten und Fehler in dem zu überwachenden System fest und erzeugt Alarme entsprechend der festgestellten Abnormalitäten und Fehler. Ein Alarmsystem verwaltet die erzeugten Alarme. Mittels der Fehlerdiagnose- und Isolierungseinheit werden in dem zu überwachenden System auftretende Fehler festgestellt und entsprechend der festgestellten Fehler ein so genannter Failure-Cause-Effect-Graph erzeugt. Mittels eines Filters wird für jeden auftretenden Alarm in dem Failure-Cause-Effect-Graph geprüft, ob es sich um einen redundanten und bisher noch nicht klassifizierten Alarm handelt. Redundante Alarme werden unterdrückt, nicht redundante und bisher noch nicht klassifizierte Alarme werden angezeigt.

Nachteilig bei dem bekannten Verfahren ist, dass Alarme auch dann erzeugt werden, wenn Abnormalitäten aufgrund eines bestimmten gewollten Prozesszustandes der Prozessanlage entstehen.

Des Weiteren ist aus der US-A-5 325 522 eine Prozesssteuerung bekannt, welche eine Alarmverwaltung aufweist. Hauptzweck der Alarmverwaltung ist es, bestimmte Betriebszustände zu überwachen und fehlerhafte Betriebszustände zur Anzeige zu bringen. Die Anzeige eines Alarms erfolgt so lange, wie der fehlerhafte Betriebszustand anhält. Gegebenenfalls kann das Erlöschen der Anzeige eines Alarms davon abhängig gemacht werden, dass ein Operator den Alarm quittiert hat.

Aus der genannten Druckschrift ist weiterhin bekannt, Alarme während des Hochfahrens der Anlage zu ignorieren. Hierzu können bestimmte Alarme maskiert werden, welche dann während des Hochfahrens der Anlage nicht angezeigt werden.

Zum Maskieren von Alarmen steht eine Konfigurationstabelle zur Verfügung, mittels welcher der Alarmverwaltung unter anderem mitgeteilt werden kann, welche Alarme während des Hochfahrens der Anlage nicht angezeigt werden sollen. Hierzu werden in entsprechende Spalten der Tabelle die Bezeichnung des jeweiligen Alarms sowie die Angabe eingetragen, ob der betreffende Alarm beim Hochlaufen der Anlage angezeigt werden soll oder nicht.

Darüber hinaus ist aus Henningsen et al.: "Intelligent alarm handling in cement plants-lessons learned from the nuclear industry" ein Alarm-Management-System bekannt, bei welchem vorgesehen ist, die Überschaubarkeit von anstehenden Alarmen durch eine Filterung der Alarme zu verbessern. Durch die Filterung der Alarme soll die Anzahl der angezeigten Alarme reduziert werden. Der Druckschrift kann zwar entnommen werden, dass die Filterung der Alarme vom Prozesszustand abhängig gemacht werden kann, Angaben darüber, wie ein bestimmter Prozesszustand berücksichtigt werden kann, lassen sich der Druckschrift jedoch nicht entnehmen.

Darüber hinaus ist aus Larson, Öhman, Nihlwing, Jokstad, Kristiansen, Kvalem, Lind: "Alarm Reduction and Root Cause Analysis for Nuclear Power Plant Control Rooms" ein Verfahren zur Reduktion von Alarmen bekannt, bei dem die Anzeige von Alarmen in Abhängigkeit von Vorgaben eines Operators unterdrückt wird. Hierdurch lässt sich insbesondere die Anzeige von Alarmen während des Hochfahrens bzw. Herunterfahrens einer Anlage unterdrücken. Zur Unterdrückung der Alarmanzeigen wird auf spezielle Softwarewerkzeuge verwiesen.

So ist vorgesehen, den aktuellen Anlagenzustand zu erfassen und jedem aktiven Alarm eine vom Anlagenzustand abhängige Priorität zuzuordnen, einschließlich einer Unterdrückung des Alarms, sofern er für den aktuellen Anlagenzustand irrelevant ist. Die Zuordnung der Prioritäten geschieht mittels einer Eingabe in eine dem Anlagenzustand entsprechende Tabelle.

Weiterhin ist aus Bray M. et al.: "Practical Alarm Filtering" ein Verfahren zum Filtern von Alarmen bekannt, mittels dem die Anzeige von Alarmen verringert werden soll. Hierzu wird den Alarmen eine Priorität zugeordnet, wodurch die Alarme miteinander verglichen werden können.

Aus der DE 10 2004 016 929 A1 ist des Weiteren ein Auswahllogikblock mit Ausblendungsfunktionen für Betrieb und Wartung für ein Prozesssteuerungssystem bekannt, welcher eine oder mehrere Grenzwert-Detektionseinheiten aufweist, die feststellen, wenn ein zugeordneter Eingang einen bestimmten Grenzwert erreicht hat, der einen Zustand innerhalb der Prozessanlage kennzeichnet. Des Weiteren ist eine Eingangs-Ausblendungseinheit vorhanden, die von einem Nutzer gesetzt werden kann, um die Berücksichtigung des betreffenden Eingangs bei der Auswahlfunktion zu übergehen. Ein Auswahlfunktionslogikobjekt dient zur Feststellung des Vorliegens einer Abschaltbedingung auf Basis der Werte der gültigen Eingänge. Ein Sperrblock kann für das Außerkraftsetzen des Ausgangs des Auswahllogikblocks beispielsweise während des Anlaufs oder anderer Betriebszustände genutzt werden.

Weiterhin ist aus einer parallelen Patentanmeldung der Anmelderin ein Verfahren und eine Vorrichtung zum automatischen Ausblenden von Prozessalarmen bekannt, bei dem bzw. bei der eine konfigurierbare Menge von Alarmen berücksichtigt wird, die in Abhängigkeit von definierbaren Anlagenzuständen durch das Alarmverarbeitungssystem einer Prozessanlage zwar verarbeitet, dem Anlagenbediener oder Operator jedoch nicht angezeigt werden. Dabei wird während der Projektierung einer Prozessanlage eine bestimmte Menge von Alarmen für einen bestimmten Anlagen- oder Teilanlagenzustand als nicht relevant eingestuft. Tritt während der Prozessführung ein derartiger nicht relevanter Alarm auf, so blendet das Alarmverarbeitungssystem diesen Alarm für den Operator aus, d. h., die entsprechenden Alarminformationen werden nicht (optisch und/oder akustisch) zur Anzeige gebracht.

Auch bei einer solchen, an sich vorteilhaften Lösung kann jedoch der Fall auftreten, dass bei einem Meldeschwall die Anzahl der für einen gegenwärtigen Anlagenzustand definierten relevanten Alarme noch zu groß ist und sich zu einer nur schwer beherrschbaren Herausforderung für den Operator auswächst.

Der Erfindung liegt die Aufgabe zugrunde, eine Prozessanlage und ein Verfahren zu deren Betrieb anzugeben, bei denen in einfacher Weise eine Reduktion der angezeigten Alarme des Alarmaufkommens in Abhängigkeit von bereits anstehenden Alarminformationen der Anlage möglich ist, wobei eine vollständige Rückverfolgbarkeit von Alarminformationen möglich sein soll. Darüber hinaus soll trotz allem eine einfache Bedienbarkeit der Prozessanlage gegeben sein.

Die Aufgabe wird bei einem Verfahren der eingangs genannten Art durch die kennzeichnenden Merkmale des Patentanspruchs 1 gelöst.

Erfindungsgemäß wird ein Verfahren zum Betreiben einer Prozessanlage, bei der auf Prozessebene eine Anzahl von Alarminformationen zum Anzeigen nicht ordnungsgemäßer Betriebsvorgänge der Prozessanlage generiert wird, angegeben, bei dem
a) eine Anzahl von Prozesszuständen der Prozessanlage definiert wird;
b) während des Betriebs der Prozessanlage generierbare Alarminformationen definiert werden;
c) wenigstens einer Anzahl der generierbaren Alarminformationen jeweils zumindest ein erster Wert oder ein zweiter Wert als Abhängigkeitswert zugewiesen wird;
d) jeder Prozesszustand mit der Summe der generierbaren Alarminformationen korreliert wird, wobei jedem aus einem Prozesszustand und einer Alarminformation gebildeten Paar ein erster Wert oder ein zweiter Wert als Korrelationswert zugewiesen wird;
e) ein gegenwärtiger Prozesszustand der Prozessanlage bestimmt wird;
f) in Abhängigkeit von dem bestimmten Prozesszustand diejenigen Alarminformationen nicht zur Anzeige gebracht werden, denen als Korrelationswert der erste Wert zugewiesen wurde oder denen als Abhängigkeitswert der erste Wert zugewiesen wurde, wobei
g) die Korrelation von Prozesszuständen und Alarminformationen in Form wenigstens einer Konfigurationsmatrix erfolgt, wobei eine erste Dimension der Konfigurationsmatrix durch die definierten Prozesszustände und eine zweite Dimension der Konfigurationsmatrix durch die generierbaren Alarminformationen gebildet wird, wobei die Korrelationswerte die Einträge der Konfigurationsmatrix darstellen, sowie
h) die Abhängigkeitswerte in Form wenigstens einer Folgealarmmatrix angeordnet werden, wobei eine Dimension der Folgealarmmatrix durch die generierbaren Alarminformationen gebildet wird.

Darüber hinaus wird die Aufgabe bei einer Prozessanlage der eingangs genannten Art durch die kennzeichnenden Merkmale des Patentanspruchs 16 gelöst.

Erfindungsgemäß ist eine Prozessanlage mit einer Anzahl von Alarmgebern auf Prozessebene, die zum Generieren einer Anzahl von Alarminformationen zum Anzeigen nicht ordnungsgemäßer Betriebsvorgänge der Prozessanlage ausgebildet sind, und mit einer Alarmanzeigeeinrichtung zum Anzeigen von Alarminformationen sowie mit einem Alarmverarbeitungssystem auf Prozessleitebene, das die generierten Alarminformationen empfängt, wobei wenigstens einer Anzahl von Alarminformationen zumindest jeweils ein erster Wert oder ein zweiter Wert als Abhängigkeitswert zuweisbar ist, wobei das Alarmverarbeitungssystem in Abhängigkeit von dem Abhängigkeitswert zum Steuern der Alarmanzeigeeinrichtung zum Ausblenden derjenigen Alarminformationen ausgebildet ist, denen als Abhängigkeitswert der erste Wert zugewiesen wurde, dadurch gekennzeichnet, dass das Alarmverarbeitungssystem für die Alarminformationen wenigstens eine Folgealarmmatrix aufweist, wobei eine Dimension der Folgealarmmatrix durch die generierbaren Alarminformationen gebildet ist, wobei die Abhängigkeitswerte die Einträge der Folgealarmmatrix darstellen.

Die Aufgabe wird auch gelöst durch ein Computerprogrammprodukt zum Betreiben einer Prozessanlage, das Programmcodesequenzen aufweist, die bei Ausführung in einem Prozessleitsystem der Prozessanlage in Abhängigkeit von ermittelten Prozesszustandsdaten der Prozessanlage zum Verarbeiten von auf Prozessebene generierten Alarminformationen nach einem erfindungsgemäßen Verfahren ausgebildet sind.

Vorteilhafte Ausgestaltungen der vorliegenden Erfindung sind Gegenstand von Unteransprüchen, deren Wortlaut hiermit durch Bezugnahme zum Bestandteil der Beschreibung gemacht wird.

Durch den erfindungsgemäß eingeführten Abhängigkeitswert, der jeder generierbaren Alarminformation zugeordnet bzw. zuordenbar ist, lässt sich bei der Projektierung einer Prozessanlage festlegen, ob ein bestimmter Alarm bzw. eine entsprechende generierte Alarminformation als Folgealarm behandelt werden soll oder nicht. Ein Folgealarm ist dabei - wie bereits erwähnt - eine Art von Alarm, die regelmäßig in Abhängigkeit von mindestens einem anderen Alarm auftritt. Folgealarme können somit auch als abhängige Alarme angesehen werden, die von wenigstens einem entsprechenden unabhängigen Alarm abhängig sind oder zumindest regelmäßig in der Folge eines solchen unabhängigen Alarms auftreten. Wenn also ein entsprechender unabhängiger Alarm ansteht, d. h. entsprechende Alarminformationen generiert wurden, brauchen Folgealarme, d. h. solche Alarme, denen als Abhängigkeitswert der erste Wert (= abhängig) zugewiesen wurde, nicht angezeigt zu werden, da die entsprechenden Fehlerzustände regelmäßig mit Wegfall des wenigstens einen unabhängigen Alarms, d. h. bei entsprechender Beseitigung der Fehlerquelle, mit beseitigt werden.

Der vorgeschlagene Lösungsansatz integriert Alarmunterdrückungsmechanismen, die auf Abhängigkeiten generierter Alarminformationen untereinander beruhen, mit der Möglichkeit, im Rahmen bestimmter Ausführungsformen die Relevanz von Alarminformationen in Form von Prozessalarmen dynamisch, d. h. anhand ermittelter Prozesszustände zu bestimmen und auf diese Weise nicht relevante Prozessalarme auszublenden, d. h. nicht zur Anzeige zu bringen.

Letzterer Aspekt ist für sich genommen Gegenstand einer parallelen europäischen Patentanmeldung der Anmelderin mit dem amtlichen Aktenzeichen 06009891.0, auf die insoweit ausdrücklich Bezug genommen wird. Dabei erfasst das Alarmverarbeitungssystem der Prozessanlage neben der Summe aller generierbaren Prozessalarme oder Alarminformationen auch aktuelle Prozesszustände, um diese mit den Prozessalarmen zu korrelieren. Neben den auf Prozessebene generierten Prozessalarmen bzw. Alarminformationen werden also entsprechend auch Prozesszustände eines Automatisierungsprozesses bzw. einzelner Teilprozesse bei funktionaler Verteilung des Automatisierungsprozesses an das Alarmverarbeitungssystem übermittelt.

Das Alarmverarbeitungssystem entscheidet dann aufgrund der paarweisen Korrelation aus jeweils einem Prozesszustand und einer Alarminformation in Verbindung mit einem jeweils zugeordneten Korrelationswert, welche Prozessalarme bei welchen Prozesszuständen angezeigt werden sollen und welche nicht. Anschließend wird für grundsätzlich anzuzeigende Alarme erfindungsgemäß überprüft, ob sie durch ihren Abhängigkeitswert als "abhängig", d. h. als Folgealarme gekennzeichnet sind. Nicht relevante Alarme und Folgealarme können auf diese Weise in Alarmanzeigen für den Operator ausgeblendet werden. Alternativ oder zusätzlich werden ausgeblendete Alarminformationen (nicht relevante Alarme und/oder Folgealarme) von akustischen und/oder optischen Signalgebern nicht berücksichtigt.

Da keine Unterdrückung von Alarminformationen an der Alarmquelle sondern lediglich ein gezieltes Ausblenden von Alarmen im Alarmverarbeitungssystem stattfindet, können zur Nachverfolgung insbesondere auch alle ausgeblendeten Alarminformationen in einem Alarmjournal für eine spätere Nachvollziehbarkeit durch den Operator archiviert werden. Erfindungsgemäß ist somit die Gesamtfunktionalität des vorstehend skizzierten Alarmunterdrückungsmechanismus vollständig in ein vorhandenes Prozessleitsystem integrierbar.

Eine Ausgestaltung des erfindungsgemäßen Verfahrens sieht vor, dass die Abhängigkeitswerte in Form wenigstens einer Folgealarmmatrix angeordnet werden, wobei eine Dimension der Folgealarmmatrix durch die generierbaren Alarminformationen gebildet wird. In Weiterbildung des erfindungsgemäßen Verfahrens ist zusätzlich vorgesehen, dass auch die Korrelation von Prozesszuständen und Alarminformationen in Form wenigstens einer Konfigurationsmatrix erfolgt, wobei eine erste Dimension der Konfigurationsmatrix durch die definierten Prozesszustände und eine zweite Dimension der Konfigurationsmatrix durch die generierbaren Alarminformationen gebildet wird, wobei die Korrelationswerte die Einträge der Konfigurationsmatrix darstellen.

Entsprechende Weiterbildungen der erfindungsgemäßen Prozessanlage sehen einerseits vor, dass das Alarmverarbeitungssystem für die Alarminformationen wenigstens eine Folgealarmmatrix aufweist, wobei eine Dimension der Folgealarmmatrix durch die generierbaren Alarminformationen gebildet ist, wobei die Abhängigkeitswerte die Einträge der Folgealarmmatrix darstellen. Andererseits kann vorgesehen sein, dass das Alarmverarbeitungssystem zum Korrelieren der Prozesszustände und der Alarminformationen wenigstens eine Konfigurationsmatrix aufweist, wobei eine erste Dimension der Konfigurationsmatrix durch die definierten Prozesszustände und eine zweite Dimension der Konfigurationsmatrix durch die generierbaren Alarminformationen gebildet sind, wobei die Korrelationswerte die Einträge der Konfigurationsmatrix darstellen.

Auf diese Weise ist erfindungsgemäß in besonders einfacher Weise durch ein Vornehmen von Eintragungen in die Folgealarmmatrix und/oder in die Konfigurationsmatrix ein Projektieren der Alarmrelevanz ohne System- und/oder Programmierkenntnisse möglich, um so insbesondere einem Auftreten von Meldeschwällen vorzubeugen.

Die Folgealarmmatrix kann Teil der Konfigurationsmatrix sein; insbesondere kann sie als eine Spalte der Konfigurationsmatrix ausgebildet sein, die somit in diesem Fall auch als Folgealarm-/Konfigurationsmatrix bezeichnet werden kann. Es ist jedoch auch möglich, für jeden in der Konfigurationsmatrix enthaltenen Prozesszustand eine eigene Folgealarmmatrix vorzusehen.

Aus Sicherheitsgründen ist es grundsätzlich erwünscht, alle generierten Alarminformationen zur Anzeige zu bringen, sofern nicht zustandsbedingte Gründe dagegen sprechen, z. B. ist beim Abschalten einer Anlage das Ausblenden einer den erwarteten Druckabfall anzeigenden Alarminformation wünschenswert. Daher ist bei einer besonderen Ausführungsform der Erfindung vorgesehen, dass standardmäßig der zweite Wert (= kein Ausblenden) als Abhängigkeitswert bzw. als Korrelationswert zugewiesen wird.

Um eine Rückverfolgbarkeit von Betriebszuständen der Prozessanlage zu gewährleisten, ist gemäß einer anderen Weiterbildung der Erfindung vorgesehen, dass in Abhängigkeit von dem bestimmten Prozesszustand zumindest diejenigen Alarminformationen, denen als Abhängigkeitswert bzw. als Korrelationswert der erste Wert zugewiesen wurde, in einer Speichereinrichtung archiviert werden. Vorzugsweise werden jedoch alle generierten Alarminformationen unabhängig von ihrer gegenwärtigen Relevanz oder Abhängigkeit in der Speichereinrichtung archiviert.

Zwecks einer vollständigen Integrierbarkeit der Erfindung in vorhandene Prozessanlagen ist in Weiterbildung der Erfindung insbesondere vorgesehen, dass bei Ausgestaltungen des erfindungsgemäßen Verfahrens der Prozesszustand in Schritt c) auf Prozessebene bestimmt und zusammen mit der Summe der generierten Alarminformationen zu einer Prozessleitebene der Prozessanlage übertragen wird und dass die Schritte b) und d) in einem Alarmverarbeitungssystem auf der Prozessleitebene durchgeführt werden.

Vorzugsweise wird bei einem Wechsel der Prozessanlage in einen neuen Prozesszustand im Zeitpunkt des Wechsels bei Ausgestaltungen des erfindungsgemäßen Verfahrens Schritt d) erneut ausgeführt, wobei anstehende, bereits generierte Alarminformationen in Abhängigkeit von dem neuen Prozesszustand zur Anzeige gebracht werden.

Auf diese Weise ist eine vollständig dynamische Alarmunterdrückung möglich.

In Weiterbildung des erfindungsgemäßen Verfahrens ist noch vorgesehen, dass bei fehlerhafter Bestimmung des Prozesszustands in Schritt c) im nachfolgenden Schritt d) auch alle weiteren generierten Alarminformationen zur Anzeige gebracht werden.

Auf diese Weise ist zum Erreichen einer erhöhten Anlagensicherheit gewährleistet, dass bei fehlerhaftem Arbeiten der erfindungsgemäßen Alarmunterdrückung keine generierten Alarminformationen verloren gehen.

Alternativ kann vorgesehen sein, dass bei fehlerhafter Bestimmung des Prozesszustands in Schritt c) im nachfolgenden Schritt d) die weiteren generierten Alarminformationen nur in Abhängigkeit von dem zugehörigen Abhängigkeitswert zur Anzeige gebracht werden.

Wenn ein von der erfindungsgemäßen Anlage durchgeführter Automatisierungsprozess funktional in mehrere Teilprozesse aufgeteilt ist, sieht eine Weiterbildung der Erfindung vor, dass jedem Teilprozess eine Anzahl von Teilprozesszuständen und eine Anzahl von generierbaren Alarminformationen in Form einer Alarmgruppe zugeordnet werden und dass die Schritte b) bis d) von Ausgestaltungen des erfindungsgemäßen Verfahrens für jeden Teilprozess separat ausgeführt werden.

Im Zuge entsprechender Weiterbildungen des erfindungsgemäßen Verfahrens werden anstehende Folgealarme nach Maßgabe des entsprechenden Abhängigkeitswertes so lange ausgeblendet, wie wenigstens ein unabhängiger Alarm, d. h. ein Alarm, der nicht als Folgealarm klassifiziert ist, ansteht und entsprechend angezeigt wird. Wie bereits ausgeführt wurde, ist bei Wegfall eines unabhängigen Alarms davon auszugehen, dass bei korrekter Klassifizierung auch alle Folgealarme wegfallen, zumindest soweit sie auf den entsprechenden unabhängigen Alarm bezogen sind. In der Regel werden also bei Wegfall eines unabhängigen Alarms auch die entsprechenden Folgealarme "erledigt sein". Allerdings kann diesbezüglich in Weiterbildung des erfindungsgemäßen Verfahrens vorgesehen sein, dass bei Wegfall eines, insbesondere des letzten, unabhängigen Alarms alle noch anstehenden Folgealarme unmittelbar zur Anzeige gebracht werden. Alternativ kann vorgesehen sein, dass noch anstehende Folgealarme in der Reihenfolge ihres (zeitlichen) Auftretens zur Anzeige gebracht werden, sodass ein zuerst aufgetretener Folgealarm auch zuerst angezeigt wird. Anschließend werden sequentiell weitere noch anstehende Folgealarme in der Reihenfolge ihres Auftretens zur Anzeige gebracht.

Gemäß einer anderen Weiterbildung des erfindungsgemäßen Verfahrens kann auch vorgesehen sein, dass die generierbaren Alarminformationen zusätzlich zu dem Abhängigkeitswert noch mit einem weiteren Wert in Form eines Prioritätswertes versehen sind. Der Prioritätswert kann angeben, in welcher Reihenfolge noch anstehende Folgealarme unabhängig von ihrer zeitlichen Reihenfolge zur Anzeige gebracht werden. In der Regel wird jedoch eine entsprechende Vorpriorisierung bereits bei der Definition eines bestimmten Alarms mit vorgegeben und muss somit nicht im Rahmen des hier beschriebenen Alarm-Ausblendeverfahrens erneut definiert werden.

Während in Weiterbildung der vorliegenden Erfindung die Unterscheidung zwischen den ersten und zweiten Werten für die Abhängigkeits- bzw. Korrelationswerte vorzugsweise binär (0/1; Eintrag/kein Eintrag) erfolgt, kann insbesondere zur Realisierung der erwähnten Priorisierung auch vorgesehen sein, dass die Abhängigkeitswerte als Mehrbit-Werte ausgestaltet sind, sodass sie weitere Informationen, wie insbesondere die erwähnte Prioritätsstufe, enthalten können.

Im Zuge einer besonderen Ausgestaltung der Erfindung lässt sich demnach das Laufzeitverhalten einer erfindungsgemäßen Prozessanlage bzw. der Ablauf des erfindungsgemäßen Verfahrens wie folgt zusammenfassen: Solange mindestens ein Alarm bezogen auf eine Alarmgruppe, d. h. einen Teilprozess, im Alarmverarbeitungssystem ansteht, werden weitere Alarme, die anhand ihrer Abhängigkeitswerte als Folgealarme markiert sind, an den Alarmanzeigen für einen Operator ausgeblendet bzw. von weiteren optischen oder akustischen Signalgebern nicht berücksichtigt. Um die Nachverfolgung von Prozessabläufen zu gewährleisten, werden jedoch auch die Folgealarme für den Operator in einem Alarmjournal archiviert.

Dabei wendet das Alarmverarbeitungssystem die Kennung "Folgealarm" im Rahmen entsprechender Ausgestaltungen der vorliegenden Erfindung ausschließlich bei solchen Anlagenzuständen an, bei denen der entsprechende Alarm relevant ist, d. h. beim Projektieren der Prozessanlage nicht explizit als irrelevant markiert wurde. Es kommt somit zu einer sequentiellen Maskierung von Alarmen, wobei vorteilhafterweise zunächst die in einem bestimmten Prozesszustand generell nicht relevanten Alarme ausgeblendet werden und anschließend eine Überprüfung dahin gehend erfolgt, ob es sich bei den als relevant verbliebenen Alarmen um Folgealarme handelt, die somit entsprechend in einem zweiten Schritt ausgeblendet werden.

Solche Alarme, die nicht als Folgealarme gekennzeichnet sind, werden auch im Falle eines Meldeschwalls, d. h. bei einem gehäuften, nahezu zeitgleichen Auftreten einer Vielzahl von Alarmen, dem Operator wie gewohnt (z. B. in Listenform) angezeigt bzw. führen zu entsprechenden optischen/akustischen Signalen, falls das entsprechende Signal für den (in der Liste) vorangehenden Alarm bereits quittiert wurde.

Ändert sich der Status eines ausgeblendeten, d. h. entsprechend mit dem ersten Abhängigkeitswert markierten Folgealarms von "Gekommen" nach "Gegangen", so wird der Alarm vom Alarmverarbeitungssystem selbst quittiert, d. h. sein Anstehen wird bestätigt. Ausgeblendete Folgealarme, für die kein Status "Gegangen" definiert ist, werden unmittelbar beim Auftreten des Status "Gekommen" vom Alarmverarbeitungssystem quittiert.

Wie bereits erwähnt, wird dann, wenn alle sichtbaren Alarme einer Alarmgruppe vom Operator quittiert worden sind und nicht länger anstehen, im Zuge einer Ausgestaltung des erfindungsgemäßen Verfahrens ein verborgener, d. h. ausgeblendeter, noch anstehender Folgealarm vom Alarmverarbeitungssystem sichtbar gemacht. Stehen mehrere verborgene Folgealarme an, so wird im Zuge einer Ausgestaltung des erfindungsgemäßen Verfahrens zunächst derjenige Folgealarm sichtbar gemacht, der den ältesten "Gekommen"-Status nach Art eines Zeitstempels aufweist.

Alarme, die aufgrund ihrer Folgealarmkennung, d. h. ihres Abhängigkeitswertes, aktuell ausgeblendet sind, werden in Weiterbildung der vorliegenden Erfindung vorteilhafterweise in einer separaten Liste zusammen mit den aktuell anstehenden nicht relevanten Alarmen dargestellt.

Änderungen der Projektierung der Folgealarme, d. h. veränderte Einträge hinsichtlich der jeweiligen Abhängigkeitswerte, können im Zuge einer Ausgestaltung des erfindungsgemäßen Verfahrens zur Laufzeit vom Alarmverarbeitungssystem übernommen werden.

Vorteilhafterweise kann der nachstehende Ansatz für eine automatisierte Projektierung von Folgealarmen verwendet werden, wobei die Konfiguration von Folgealarmen prinzipiell systemunterstützt erfolgen kann: Hierzu werden während der Inbetriebnahme-/Testphase einer Prozessanlage Meldeschwälle aufgrund abnormaler Situationen vom System erfasst und ausgewertet. Gegebenenfalls kann das System dazu eingerichtet sein, selbst die Erzeugung derartiger Meldeschwälle auszulösen. Das System schlägt nun aufgrund der oben genannten Auswertung eine Liste von Folgealarmen für eine Alarmgruppe vor, die der Inbetriebsetzer der Prozessanlage bestätigen und gegebenenfalls anpassen kann.

Die Ermittlung von Folgealarmen in Bezug auf bestimmte Meldeschwälle kann auch während des Anlagenbetriebs durch Auswertung des Alarmjournals erfolgen. Hierzu ist im Zuge einer Ausgestaltung des erfindungsgemäßen Verfahrens ein entsprechendes Analysetool vorgesehen, welches nach Auswertung des Alarmsignals eine Liste erkannter Folgealarme für eine Alarmgruppe generiert, indem es z. B. untersucht, welche Alarme beim vorherigen Auftreten bestimmter anderer Alarme regelmäßig mit auftreten. Eine als Anlagenoptimierer fungierende Bedienperson kann anschließend den Vorschlag bestätigen und gegebenenfalls anpassen.

Vorteilhafterweise trägt die vorliegende Erfindung zur Senkung von Engineeringkosten bei, indem sie die Projektierung von Prozessanlagen ohne Programmierkenntnisse ermöglicht, d. h. das Bestimmen von Folgealarmen durch einfache Wertzuweisung, insbesondere durch Markieren in einer Tabelle ermöglicht. Die angesprochene Integration des Konfigurationsschrittes in ein existierendes Leitsystem auf Prozessleitebene ermöglicht darüber hinaus die Nutzung vorhandener Systemkenntnisse. Eine Liste der konfigurierten Folgealarme kann in einfacher Weise aufgrund einer entsprechenden Filterparametrierung angezeigt werden. Somit trägt die vorliegende Erfindung auch zu einer Erhöhung der Anlagensicherheit bei, indem eine Operatorbelastung durch Beschränkung von Alarmierungen auf einen oder weniger Alarme pro tatsächlichem Ereignis reduziert wird. Dabei werden automatisierte Abläufe nicht beeinflusst, sondern nur Informationen an der Operatorschnittstelle angepasst. Die weitere Reduzierung der Operatorbelastung trägt auch zu einer Senkung der Betriebskosten bei.

Weitere Eigenschaften und Vorteile der vorliegenden Erfindung ergeben sich aus der nachfolgenden Beschreibung von Ausführungsbeispielen anhand der Zeichnung.

Es zeigt:
- Figur 1: ein schematisches Blockschaltbild einer erfindungsgemäßen Prozessanlage;
- Figur 2: eine schematische Darstellung einer Bildung von Alarmgruppen in der erfindungsgemäßen Prozessanlage gemäß Figur 1;
- Figur 3: anhand einer detaillierten Darstellung einen Zustandsbaustein der Prozessanlage gemäß Figur 1;
- Figur 4: ein Zeitablaufdiagramm des Alarmverhaltens einer nach einem erfindungsgemäßen Verfahren betriebenen Prozessanlage;
- Figur 5: ein weiteres Zeitablaufdiagramm des Alarmverhaltens einer nach einem erfindungsgemäßen Verfahren betriebenen Prozessanlage und
- Figur 6: ein Flussdiagramm einer Ausgestaltung des erfindungsgemäßen Verfahrens.

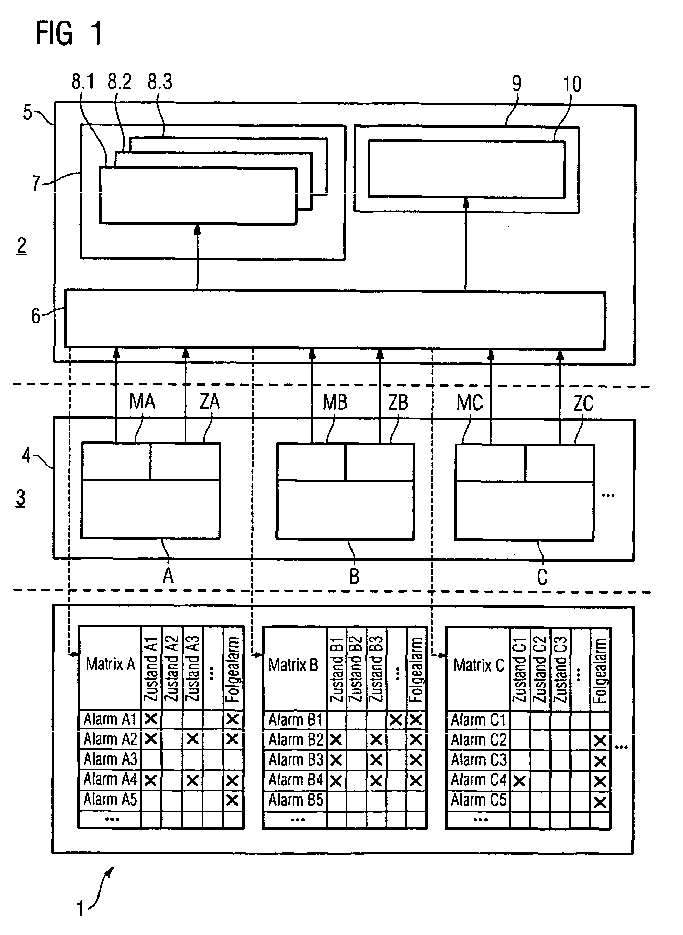

Figur 1 zeigt eine Prozessanlage 1, beispielsweise zur Durchführung von chemischen oder pharmazeutischen Prozessen oder für Prozesse in der Öl-/Gasindustrie, der holzverarbeitenden Industrie, der Papierindustrie oder dergleichen. Eine derartige Anlage weist grundsätzlich eine Prozessleitebene 2 sowie eine Prozessebene 3 auf, wobei auf letzterer die eigentlichen Automatisierungsprozesse angesiedelt sind, die für Art und Einsatz der Prozessanlage charakteristisch sind. In Figur 1 ist exemplarisch ein derartiger Automatisierungsprozess dargestellt und mit Bezugszeichen 4 versehen.

Auf Prozessleitebene 2 besitzt die erfindungsgemäße Prozessanlage 1 ein Alarmsystem 5, das zunächst ein Alarmverarbeitungssystem 6 aufweist, welches vorzugsweise softwaretechnisch in einer nicht explizit dargestellten Datenverarbeitungseinrichtung ausgebildet ist. Das Alarmverarbeitungssystem 6 steht in Wirkverbindung mit einer Alarmanzeigeeinrichtung 7, die ihrerseits eine Anzahl von Alarmanzeigen/Alarmsignalgebern 8.1 bis 8.3 aufweist, bei denen es sich beispielsweise um visuelle/optische Alarmanzeigen, wie Lampen oder Bildschirmfenster, oder um akustische Alarmanzeigen, wie Hupen oder Sirenen, handeln kann. Darüber hinaus steht das Alarmverarbeitungssystem 6 in Wirkverbindung mit einer Speichereinrichtung 9, die vorliegend zum Speichern einer Archivdatei 10 in Form eines so genannten Alarmjournals ausgebildet ist.

Auf Prozessebene 3 besitzt die erfindungsgemäße Prozessanlage 1 als Bestandteile des Automatisierungsprozesses 4 eine Reihe von Teilprozessen A, B, C, die jeweils mit bestimmten Teil- oder Unterprozessen des Automatisierungsprozesses 4 identifizierbar sind. Jeder der drei Prozesse A bis C umfasst eine Reihe von nicht explizit dargestellten prozesstechnischen Arbeitsvorgängen, denen bei einer Prozessanlage der in Figur 1 gezeigten Art regelmäßig Überwachungseinrichtungen in Form von Druck-, Temperatursensoren oder dergleichen zugeordnet sind, welche Prozesszustände des jeweiligen Teilprozesses A bis C überwachen. Darüber hinaus ist derartigen Überwachungseinrichtungen regelmäßig eine Anzahl von Alarmgebern auf Prozessebene zugeordnet, die zum Generieren einer Anzahl von Alarminformationen zum Anzeigen nicht ordnungsgemäßer Betriebsvorgänge der Prozessanlage bzw. des jeweiligen (Teil-)Prozesses ausgebildet sind, z. B. wenn ein gemessener Druck stark abfällt.

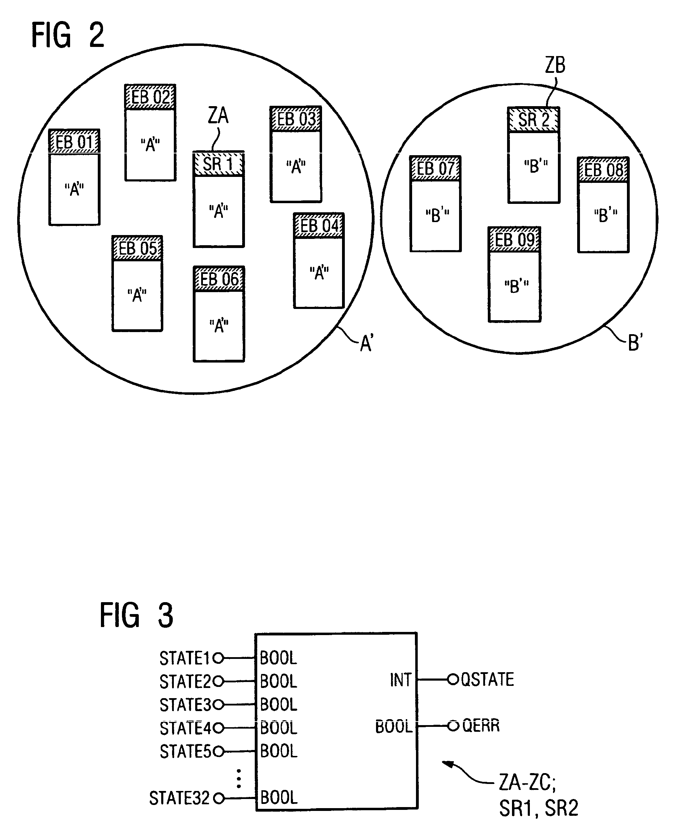

In alarmtechnischer Hinsicht kann daher jeder der in Figur 1 dargestellten Teilprozesse A bis C bzw. können die im Rahmen des betreffenden Teilprozesses vorgesehenen Alarmgeber auch als Alarmgruppe bezeichnet werden, auf deren konkrete Ausgestaltung im Falle der vorliegenden Erfindung weiter unten anhand der Figur 2 noch detailliert eingegangen wird.

Jeder der Teilprozesse A bis C bzw. die entsprechende Alarmgruppe wirkt mit einem Meldebaustein oder Meldemodul MA bis MC und mit einem Zustandsbaustein oder Zustandsmodul ZA bis ZC zusammen. Die Meldebausteine MA bis MC und die Zustandsbausteine ZA bis ZC stehen ihrerseits jeweils mit dem Alarmverarbeitungssystem 6 des Alarmsystems 5 in signaltechnischer Wirkverbindung.

Wie aus Gründen der Übersichtlichkeit im unteren Teil der Figur 1 dargestellt ist, beinhaltet das Alarmverarbeitungssystem 6 eine Anzahl von Folgealarm-/Konfigurationsmatrizen Matrix A, Matrix B, Matrix C. Jede der Matrizen ist einem der Teilprozesse A bis C bzw. der entsprechenden Alarmgruppe zugeordnet. Eine erste Dimension (Spalten) der Folgealarm-/Konfigurationsmatrizen Matrix A, Matrix B, Matrix C wird durch vordefinierte Prozesszustände des entsprechenden Teilprozesses A bis C gebildet. Diese Prozesszustände sind in Figur 1 mit Zustand Ai, Zustand Bi, Zustand Ci bezeichnet, wobei i = 1, 2, ..., N. Dabei bezeichnet N eine maximale Anzahl möglicher Zustände pro Teilprozess, wobei N von Teilprozess zu Teilprozess variieren kann. Die zweite Dimension (Zeilen) der Folgealarm-/Konfigurationsmatrizen Matrix A, Matrix B, Matrix C ist durch die jeweilige Summe der für den entsprechenden Teilprozess A bis C generierbaren Alarminformationen gebildet. Dabei entspricht jede der in Figur 1 mit Alarm Ai, Alarm Bi, Alarm Ci bezeichneten Alarminformationen dem Alarmsignal eines Alarmgebers aus der dem entsprechenden Teilprozess jeweils zugeordneten Alarmgruppe. Dabei ist jeder der dargestellten Alarme zum Anzeigen eines nicht ordnungsgemäßen Betriebsvorgangs der Prozessanlage bzw. eines auf dieser ablaufenden Teilprozesses vorgesehen.

Die jeweils letzte Spalte der Matrizen A, B, C ist mit "Folgealarm" bezeichnet; ihre Einträge definieren, ob ein Alarm Ai, Bi, Ci als Folgealarm eingestuft ist (Kreuz) oder nicht.

Die Folgealarm-/Konfigurationsmatrizen Matrix A, Matrix B, Matrix C enthalten als weitere Einträge Korrelationswerte zum Korrelieren jedes Prozesszustands Zustand Ai, Zustand Bi, Zustand Ci mit der entsprechenden Summe der für den jeweiligen Teilprozess A bis C generierbaren Alarminformationen Alarm Ai, Alarm Bi, Alarm Ci. Die Korrelationswerte sind in Figur 1 in Form von Kreuzen "X" bzw. leeren (weißen) Feldern in den entsprechenden Matrizen dargestellt. Dabei betrifft jeder Matrixeintrag ein aus einem Prozesszustand und einer Alarminformation gebildetes Paar. Entsprechend ist jedem dieser Paare ein erster Wert ("X") oder ein zweiter Wert (weißes Feld) als Korrelationswert zugewiesen.

Weiterhin gibt - wie bereits erwähnt - die letzte Spalte der betreffenden Matrix an, ob ein bestimmter Alarm ein Folgealarm ist oder nicht. Dabei ist jedem Alarm ein erster Wert ("X") oder als Grundeinstellung ein zweiter Wert (leeres Feld) als Abhängigkeitswert zugewiesen.

Die Matrizen Matrix A, Matrix B, Matrix C dienen erfindungsgemäß dazu, in Abhängigkeit von einem bestimmten/ermittelten Prozesszustand der Prozessanlage 1 bzw. eines entsprechenden Teilprozesses A bis C diejenigen im Rahmen dieses Teilprozesses generierten Alarminformationen Alarm Ai, Alarm Bi, Alarm Ci nicht zur Anzeige zu bringen, d. h. auszublenden, denen als Korrelationswert und/oder als Abhängigkeitswert der erste Wert ("X") zugewiesen wurde. Mit anderen Worten: Die "X"-Einträge in den vorderen Spalten der Matrizen Matrix A, Matrix B, Matrix C in Figur 1 bilden eine Konfiguration nicht-relevanter Prozessalarme in Abhängigkeit von einem Prozesszustand und dienen dem Alarmverarbeitungssystem 6 als eine Art erste Maske zum Ausblenden von Alarminformationen, die somit nicht mittels der Alarmanzeigeeinrichtung 7 zur Anzeige gebracht werden. Die letzte Spalte der Matrizen A, B, C dient zusätzlich als eine Art zweite Maske zum weiteren Ausblenden von Folgealarmen, um Meldeschwälle zu unterbinden.

Der Betrieb der erfindungsgemäßen Prozessanlage 1 wird nachfolgend nochmals zusammenfassend erläutert:

Für den Betrieb der Prozessanlage 1, d. h. zur Beschreibung der in den Teilprozessen A bis C ablaufenden Betriebsvorgänge werden im Rahmen des vorliegenden Ausführungsbeispiels und ohne Beschränkung der Allgemeinheit eine Reihe von Zuständen Zustand Ai, Zustand Bi, Zustand Ci definiert, wie beispielsweise Anfahren, Normalbetrieb, Not-Aus, Herunterfahren oder dergleichen. Des Weiteren beinhaltet jeder Teilprozess A bis C bzw. die zugehörige Alarmgruppe eine Reihe von Alarmgebern, die bei einem Auftreten nicht ordnungsgemäßer Betriebsvorgänge innerhalb des betreffenden Teilprozesses entsprechende Alarminformationen oder Alarmsignale Alarm Ai, Alarm Bi, Alarm Ci erzeugen. Mit Hilfe der Folgealarm-/Konfigurationsmatrizen Matrix A, Matrix B, Matrix C wird zunächst festgelegt, welche Prozessalarme in welchem Zustand eines jeweiligen Teilprozesses nicht relevant sind und daher, obgleich sie auf Prozessebene 3 generiert werden, auf Prozessleitebene 2 nicht zur Anzeige gebracht werden müssen, beispielsweise indem eine Sirene eingeschaltet oder ein Warnhinweis auf einem Bildschirm gezeigt wird, wie dies mit Hilfe der Alarmanzeigeeinrichtung 7 möglich wäre. Zugleich legen die Einträge in der jeweils letzten Matrixspalte fest, welche Alarme eines Teilprozesses als Folgealarme gelten und deshalb - bei Anstehen wenigstens eines Nicht-Folgealarms - auch dann nicht angezeigt werden, wenn sie als relevant eingestuft sind.

Mit anderen Worten: Durch die Alarmgruppe des betreffenden Teilprozesses A bis C werden im Falle nicht ordnungsgemäßer Betriebsvorgänge entsprechende Alarminformationen erzeugt und über den zugeordneten Meldebaustein MA, MB, MC an das Alarmverarbeitungssystem 6 übermittelt. Gleichzeitig bestimmen die den Teilprozessen A bis C jeweils zugeordneten Zustandsbausteine ZA, ZB, ZC (regelmäßig/kontinuierlich) den gegenwärtigen Prozesszustand des Teilprozesses und übermitteln diesen ebenfalls an das Alarmverarbeitungssystem 6. Das Alarmverarbeitungssystem hat somit jederzeit Kenntnis davon, in welchem Prozesszustand sich ein bestimmter Teilprozess befindet. Somit kann anhand der zugehörigen Folgealarm-/Konfigurationsmatrix Matrix A, Matrix B, Matrix C in Abhängigkeit von dem jeweiligen Prozesszustand des Teilprozesses bestimmt werden, welche der (anstehenden) Prozessalarme Ai, Bi, Ci in dem gegenwärtigen Zustand des Teilprozesses relevant sind (weißes Feld in der Matrix) und welche nicht ("X"). Anschließend wird noch geprüft, ob es sich bei einem relevanten Alarm eventuell "nur" um einen Folgealarm handelt, der entsprechend nicht angezeigt wird.

Dabei erfolgt das so genannte Alarm-Hiding (Ausblenden anstehender Alarminformationen) ausschließlich auf Prozessleitebene durch das Alarmverarbeitungssystem 6, an dem weiterhin alle durch die Alarmgruppen erzeugten Alarminformationen anliegen. Das Alarmverarbeitungssystem 6 entscheidet anschließend anhand der Folgealarm-/Konfigurationsmatrizen, welche Alarminformationen über die Alarmanzeigeeinrichtung 7 zur Anzeige gebracht werden und welche nicht.

Bei der in Figur 1 gezeigten Ausgestaltung der erfindungsgemäßen Prozessanlage 1 übermittelt das Alarmverarbeitungssystem 6 unabhängig von einer Anzeige von Alarminformationen mittels der Alarmanzeigeeinrichtung 7 alle generierten Alarminformationen, d. h. alle relevanten und alle nicht relevanten Prozessalarme und somit auch alle Folgealarme an die Speichereinrichtung 9 bzw. das darin geführte Alarmjournal 10, sodass unabhängig von der Anzeige der Alarminformationen jederzeit eine (nachträgliche) Kontrolle des Anlagenzustands möglich ist.

In dieser Weise erfolgt erfindungsgemäß die Projektierung der Relevanz und der Folgealarm-Eigenschaft eines Alarms für eine Bedienperson (Operator) der erfindungsgemäßen Prozessanlage in Bezug auf die Prozesszustände in einfacher und eindeutiger Weise über eine Matrix und erfordert insbesondere keine Programmier- oder Systemkenntnisse. Es genügt, wenn der Projektierungsingenieur, der die Anlage bezüglich der Automatisierungsfunktion konfiguriert hat, Prozesskenntnisse hat. Durch die dargestellte Gruppierung aller alarmgebenden Funktionen eines Teilprozesses zu einer Alarmgruppe ist zudem eine anlagenweite Alarmverarbeitung möglich, die - wie in Figur 1 gezeigt - mit einer vorteilhaften zentralen Datenhaltung und -persistenz auch bei verteilten Systemen einhergeht.

Figur 2 zeigt anhand einer schematischen Darstellung die Kopierung aller alarmgebenden Funktionen (vorliegend auch als Alarmgeber bezeichnet) eines Teilprozesses (vgl. Teilprozesse A bis C in Figur 1) zu einer den Teilprozessen jeweils zugeordneten Alarmgruppe. Die einzelnen Alarmgruppen sind in Figur 2 durch kreisähnliche Umgrenzungslinien dargestellt und tragen ähnliche Bezugszeichen A', B' wie die entsprechenden Teilprozesse in Figur 1. Jede Alarmgruppe A', B' enthält eine Anzahl von Alarmgebern FB01 bis FB06 bzw. FB07 bis FB09, die jeweils als zu einer entsprechenden Alarmgruppe A', B' gehörig gekennzeichnet sind "A'" bzw. "B'". Wie bereits dargestellt wurde, erzeugen die Alarmgeber FB01 bis FB09 Alarminformationen zum Anzeigen nicht ordnungsgemäßer Betriebsvorgänge der Prozessanlage bzw. des der jeweiligen Alarmgruppe zugeordneten Teilprozesses, welche durch den zugehörigen Meldebaustein MA bis MC (Figur 1) an das Alarmverarbeitungssystem 6 übermittelt werden.

Zusätzlich weist jede Alarmgruppe A', B' in Figur 2 noch einen Zustandsbaustein SR1 bzw. SR2 auf, der ebenfalls als zu der jeweiligen Alarmgruppe A', B' gehörig gekennzeichnet ist "A'", "B'". Wie ebenfalls unter Bezugnahme auf Figur 1 dargestellt wurde, dienen die Zustandsbausteine SR1, SR2, die den dort gezeigten Zustandsbausteinen ZA bis ZC entsprechen, zum Bestimmen eines (gegenwärtigen) Zustands des betreffenden Teilprozesses der Prozessanlage und übermitteln diesen in normierter Form an das Alarmverarbeitungssystem 6 (Figur 1).

Die Zustandsbausteine ZA bis ZC bzw. SR1, SR2 lassen sich daher auch als Zustandnormierungsbausteine bezeichnen.

Wie vorstehend bereits detailliert erläutert wurde, dienen diese Zustände erfindungsgemäß dazu, anhand der Folgealarm-/Konfigurationsmatrizen Matrix A, Matrix B, Matrix C (Figur 1) zu entscheiden, welche generierten Alarminformationen in Abhängigkeit von dem bestimmten Prozesszustand und ihren Folgealarm-Eigenschaften zur Anzeige gebracht werden sollen und welche nicht.

Figur 3 zeigt schematisch einen der einem Teilprozess der Figur 1 oder 2 zugeordneten Zustandsbausteine ZA bis ZC bzw. SR1, SR2. Informationen über den Prozesszustand eines Teilprozesses werden dem Zustandsbaustein in Form von Booleschen Eingangsparametern zur Verfügung gestellt, die in Figur 3 mit STATE_XX bezeichnet sind. Im Zuge des dargestellten Ausführungsbeispiels können auf diese Weise bis zu 32 Eingangsparameter vorgegeben werden. Die Eingangsparameter STATE_XX definieren (codieren) einen bestimmten Prozesszustand, welcher dem Zustandsbaustein durch die Steuerlogik eines (nicht gezeigten) Anwenderprogramms zur Steuerung des Automatisierungsprozesses 4 auf Prozessebene 3 (Figur 1) mitgeteilt wird. Auf diese Weise sind bei dem gezeigten Ausführungsbeispiel der vorliegenden Erfindung bis zu zweiunddreißig unterschiedliche Prozesszustände der Prozessanlage bzw. der ausgeführten Teilprozesse A bis C (Figur 1) definierbar. Der Zustandsbaustein gemäß Figur 3 wandelt den so definierten (codierten) Zustand in einen ganzzahligen Wert QSTATE auf einem Wertebereich von null bis zweiunddreißig um und übermittelt diesen in Form eines den jeweiligen Prozesszustand repräsentierenden Zustandssignals an das Alarmverarbeitungssystem 6, wie in Figur 1 gezeigt.

Wenn bei dem gezeigten Ausführungsbeispiel der Figur 3 keines der linearen Eingangssignale STATE_XX einen hohen Logikpegel (1) hat, ergibt sich für das Zustandssignal QSTATE der Wert Null und an einem weiteren Ausgang QERR des Zustandsbausteins wird ein Fehlersignal mit niedrigem Logikpegel (0) ausgegeben, was einen fehlerfreien Betrieb des Zustandsbausteins (nicht der Prozessanlage) anzeigt. Für den Fall, dass mehr als eines der binären Eingangssignale STATE_XX einen hohen Logikpegel (1) besitzt, wird als Zustandssignal QSTATE wiederum der Wert Null ausgegeben und am Ausgang QERR ein Fehlersignal mit hohem Logikpegel (1) erzeugt.

Das Fehlersignal QERR wird ebenfalls an das Alarmverarbeitungssystem 6 in Figur 1 übertragen, obwohl dies dort nicht explizit dargestellt ist. Es dient einer übergeordneten Steuerung des erfindungsgemäßen Alarm-Hiding-Mechanismus, wobei die unter Bezugnahme auf Figur 1 detailliert erläuterten Folgealarm-/Konfigurationsmatrizen Matrix A, Matrix B, Matrix C zum Ausblenden, d. h. zum Nicht-Anzeigen von Alarminformationen nur dann verwendet werden, wenn QERR = 0, d. h., wenn durch einen betreffenden Zustandsbaustein ZA bis ZC; SR1, SR2 kein Fehler signalisiert wird. Im entgegengesetzten Fall wird die entsprechende zugeordnete Folgealarm-/Konfigurationsmatrix Matrix A, Matrix B, Matrix C nicht verwendet, sondern es werden zur Sicherheit alle anstehenden generierten Alarminformationen für den betreffenden Teilprozess angezeigt und parallel archiviert.

Gegebenenfalls kann hierbei zwischen Alarmrelevanz und Folgealarm-Eigenschaft differenziert werden. D. h., für QERR <> O werden alle generierten Alarminformationen angezeigt, sofern es sich nicht um Folgealarme handelt.

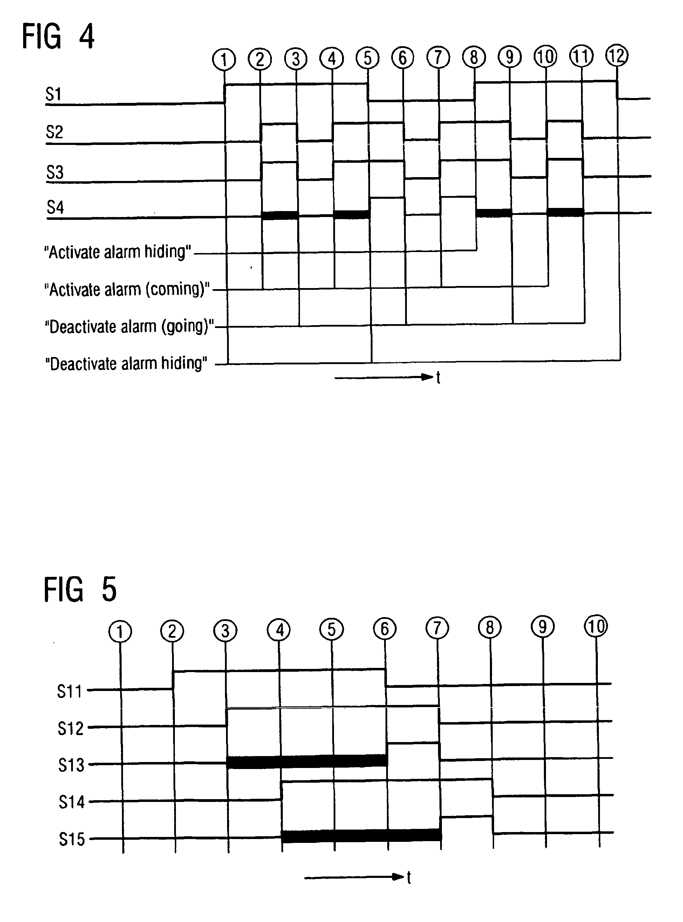

Figur 4 zeigt anhand eines Zeitablaufdiagramms das Verhalten einer erfindungsgemäßen Prozessanlage im Betrieb (Runtime-Verhalten). Dargestellt ist eine Anzahl von Signalverläufen S1 bis S4 in Anhängigkeit von der Zeit t. Dabei sind bestimmte Zeitpunkte des Zeitablaufs zwecks einfacherer Identifizierbarkeit weiterhin mit Ziffern bezeichnet und werden nachfolgend entsprechend dieser Nummerierung mit t1, t2, ... bezeichnet. Des Weiteren sind in Figur 4 in Anführungszeichen bestimmte Steuerbefehle zum Betreiben der Prozessanlage 1 bzw. des vorhandenen Alarmsystems 5 (Figur 1) angegeben, die über punktierte Verbindungslinien bestimmten Zeitpunkten bzw. Signalübergängen der Signale S1 bis S4 zugeordnet sind. Bei den Signalen S1 bis S4 handelt es sich um binäre Signale, die zwischen einem hohen Logikpegel (1) und einem niedrigen Logikpegel (0) umschaltbar sind.

Der in Figur 4 angegebene Steuerbefehl "Activate alarm hiding" wird in Abhängigkeit der Folgealarm-/Konfigurationsmatrizen Matrix A, Matrix B, Matrix C (Figur 1), welche zum Ausblenden von Rahmeninformationen in Abhängigkeit von Prozesszuständen der Prozessanlage verwendet werden, erzeugt. Er bewirkt ein Umschalten des entsprechenden Signals S1 von einem niedrigen auf einen hohen Logikpegel zu den Zeitpunkten t1 und t8. Solange das Signal S1 nicht wieder auf den niedrigen Logikpegel zurückgeschaltet wird ("deactivate alarm hiding"; Zeitpunkte t5, t12) ist der im Rahmen der vorliegenden Erfindung vorgeschlagene Alarm-Hiding-Mechanismus aktiv. Dies lässt sich in Figur 4 anhand der Signalverläufe S2 bis S4 betreffend das Anstehen von Alarminformationen in unterschiedlichen Bereichen der Prozessanlage nachvollziehen.

Der Signalverlauf S2 veranschaulicht das Anstehen bzw. die Generierung von mindestens einem Alarm bzw. einer Alarminformation auf Prozessebene 3 (Figur 1), beispielsweise durch die zu Teilprozess A gehörige Alarmgruppe A' (Figur 2). Dieser Alarm wird gemäß Figur 4 zwischen den Zeitpunkten t2 und t3, t4 und t6, t7 und t9 sowie t10 und t11 erzeugt. Signalverlauf S3 zeigt das Anstehen dieses Alarms in dem Alarmverarbeitungssystem 6 (Figur 1) an. Da erfindungsgemäß kein Ausblenden und Unterdrücken von Alarminformationen auf Prozessebene 3 stattfindet, entspricht der Signalverlauf S3 genau dem bereits beschriebenen Signalverlauf S2, da jeder auf Prozessebene erzeugte Alarm in Form einer entsprechenden Alarminformation auch auf die Prozessleitebene 2, d. h. in das Alarmverarbeitungssystem 6 gelangt.

Der Signalverlauf S4 zeigt an, wie das Alarmverarbeitungssystem 6 (Figur 1) unter Verwendung einer entsprechenden Folgealarm-/Konfigurationsmatrix mit den anstehenden Alarminformationen verfährt. Speziell gibt Signalverlauf S4 an, ob die Alarminformation gemäß Signalverlauf S2, S3 in der Alarmanzeigeeinrichtung 7 (Figur 1) zur Anzeige gebracht wird, was durch einen hohen Logikpegel (1) symbolisiert ist. Vorausgesetzt, in der zu verwendenden Folgealarm-/Konfigurationsmatrix ist für den betreffenden Alarm in Abhängigkeit von einem gegenwärtigen Prozesszustand ein entsprechender (erster) Korrelationswert ("X" in Figur 1) eingetragen oder der entsprechende Alarm ist durch Eintrag in der letzten Matrixspalte ("Folgealarm") als (abhängiger) Folgealarm markiert, wird der anstehende Alarm gemäß Signalverlauf S4 bei der Anzeige unterdrückt, was in Figur 4 durch dickere waagerechte Balken symbolisiert ist, und gelangt nur in der Zeit von t5 bis t8 zur Anzeige, da während dieser Zeit der im Rahmen der vorliegenden Erfindung vorgeschlagene Alarm-Hiding-Mechanismus deaktiviert ist (S1 = 0).

Die in Figur 4 weiterhin angegebenen Steuerbefehle "activate alarm (coming)" und "deactivate alarm (going)" korrelieren mit Zeitpunkten, in denen der betreffende Alarm aufgrund eines nicht ordnungsgemäßen Betriebsvorgangs aktiviert bzw. bei Rückkehr in einen ordnungsgemäßen Betriebsvorgang wieder deaktiviert wird.

Auf diese Weise ist das Alarmsystem 5 (Figur 1) in der Lage zu erkennen, wann die Prozessanlage bzw. eine Teilanlage/Teilprozess ihren Zustand ändert, sodass anstehende Alarme, die im neuen Anlagenzustand nach Maßgabe der Folgealarm-/Konfigurationsmatrizen nicht mehr relevant sind oder die als Folgealarme klassifiziert sind, ausgeblendet werden. Demgegenüber können ausgeblendete Alarme, die im neuen Anlagenzustand relevant werden, wieder eingeblendet werden, wenn sie nicht als Folgealarme definiert sind.

In vorteilhafter Weise bietet das Alarmsystem 5 (Figur 1) weiterhin die Möglichkeit, einer Bedienperson eine Liste aller ausgeblendeten Alarme anzuzeigen. Alternativ oder zusätzlich kann eine Liste jener Alarme angezeigt werden, die auszublenden wären, wenn sie zu dem betreffenden Zeitpunkt vom (Teil-)Prozess generiert würden.

Darüber hinaus kann im Rahmen der vorliegenden Erfindung in dem Alarmsystem 5 (Figur 1) eine Timer-Funktion vorgesehen sein, sodass beim Umschalten in einen neuen Anlagenzustand bestimmte Alarme, die in diesem Zustand nicht mehr relevant sind, jedoch in einem vorhergehenden Zustand relevant waren, noch über einen bestimmten Zeitraum weiterverfolgt, d. h. angezeigt werden, wobei das erfindungsgemäße Ausblenden derartiger Alarme erst nach Ablauf eines in der Timer-Funktion vorhandenen Timers erfolgt.

Figur 5 zeigt anhand eines weiteren Zeitablaufdiagramms das Laufzeitverhalten einer erfindungsgemäßen Prozessanlage in Betrieb. Dargestellt ist eine Anzahl von Signalverläufen S11 bis S15 in Abhängigkeit von der Zeit t. Dabei sind wiederum, wie in Figur 4, bestimmte Zeitpunkte des Zeitablaufs zwecks einfacher Identifizierbarkeit mit Ziffern bezeichnet und werden nachfolgend entsprechend angesprochen. Die Darstellungsart in Figur 5 entspricht auch ansonsten weitestgehend der in Figur 4.

Der Signalverlauf S11 illustriert das Erzeugen eines ersten Alarms im Zeitpunkt t2, der bis zum Zeitpunkt t6 andauert (ansteht). Es handelt sich hierbei um einen unabhängigen Alarm, d. h. einen Alarm, der in den Folgealarm-/Konfigurationsmatrizen nicht als Folgealarm gekennzeichnet ist. Es sei dementsprechend angenommen, dass ein derartiger Alarm während seines Anstehens zur Anzeige gebracht wird. Da es sich bei dem Signal S11 jedoch weiterhin um das erste im Zuge des beschriebenen Ausführungsbeispiels erzeugte Alarmsignal handelt, wäre im Rahmen der vorliegenden Erfindung selbst eine (fehlerhafte) Markierung als Folgealarm unschädlich, da ein erster auftretender Alarm immer angezeigt und vorzugsweise niemals als Folgealarm unterdrückt wird.

Zu späteren Zeitpunkten t3 und t4 entstehen, wie durch die Signalverläufe S12 bzw. S14 dargestellt, weitere Alarme, die jedoch in ihrer Entstehung von dem ersten Alarm (Signalverlauf S11) abhängig sind. Beispielsweise handelt es sich bei dem Signal S11 um ein Fehlersignal, welches den Ausfall einer Netzwerkkarte anzeigt. Dementsprechend kann es sich bei den Signalverläufen S12 und S14 beispielsweise um Fehlersignale handeln, welche das Fehlen eines erwarteten Druck- bzw. Temperaturmesssignals anzeigen, wobei das Ausbleiben der Messsignale ursächlich mit dem fehlerhaften Verhalten der Netzwerkkarte zusammenhängt. Dementsprechend sind die zu den Signalverläufen S12 und S14 gehörigen Alarme durch eine entsprechende Eintragung in der Folgealarm-/Konfigurationsmatrix als Folgealarme gekennzeichnet und werden im Zuge von Ausgestaltungen der vorliegenden Erfindung vom Zeitpunkt t3 bis zum Zeitpunkt t6 bzw. vom Zeitpunkt t4 bis zum Zeitpunkt t7 unterdrückt, was in Figur 5 durch die dicken horizontalen Balken zum Ausdruck gebracht wird (vgl. Signalverläufe S13 und S15). Mit anderen Worten: Zumindest solange der zu dem Signalverlauf S11 gehörige unabhängige Alarm ansteht, werden die als Folgealarme gekennzeichneten Alarme unterdrückt.

Wenn im Zeitpunkt t6 die Ursache für das Erzeugen des Signals S11 behoben ist, wird - wie dem Signalverlauf S13 zu entnehmen ist - zunächst der noch anstehende Folgealarm gemäß Signalverlauf S12 zur Anzeige gebracht. Dies ist vorliegend dadurch begründet, dass der Signalverlauf S12 im Zeitpunkt t3 vor dem Folgealarm erzeugt wurde, der zu dem Signalverlauf S14 gehört (Erzeugungszeitpunkt t4). Wenn anschließend im Zeitpunkt t7 auch der erste Folgealarm (Signalverlauf S12) nicht mehr ansteht, wird anschließend zwischen den Zeitpunkten t7 und t8 der zweite Folgealarm (Signalverlauf S14) zur Anzeige gebracht.

Regelmäßig wird es jedoch auch vorkommen, dass mit Wegfall der Ursache des unabhängigen Fehlersignals (Signalverlauf S11) auch die Ursache für die Folgealarme behoben ist, sodass ab dem Zeitpunkt t6 gar keine Alarme mehr angezeigt werden.

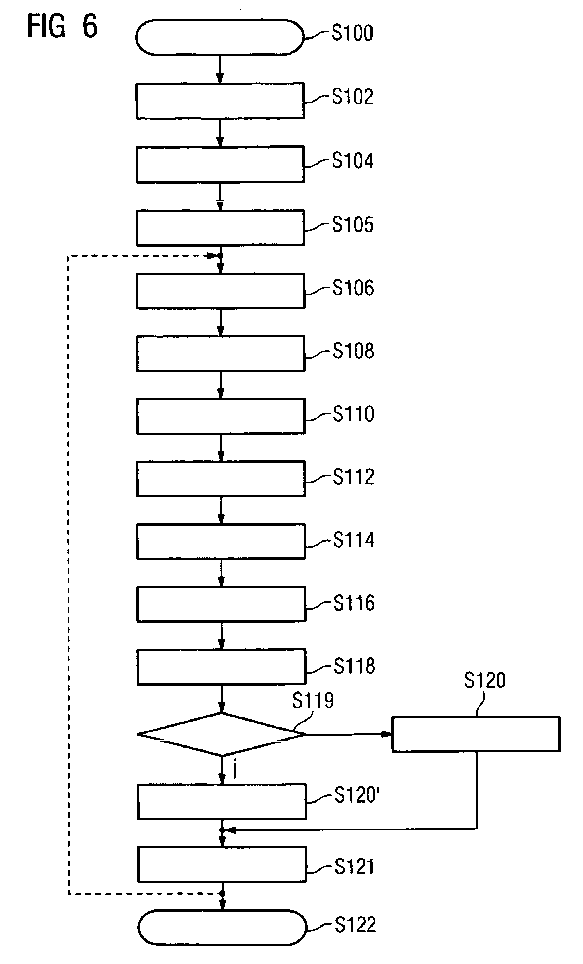

Figur 6 zeigt ein Flussdiagramm zur Darstellung einer Ausgestaltung des erfindungsgemäßen Verfahrens zum Betreiben einer Prozessanlage, insbesondere der Prozessanlage 1 in Figur 1.

Das Verfahren beginnt im Schritt S100. In einem anschließenden Schritt S102 wird eine Anzahl von Prozesszuständen der Prozessanlage definiert. Insbesondere kann dabei in Schritt S102 auf Prozessebene eine Anzahl von Teilprozessen definiert werden, wobei jedem Teilprozess eine Anzahl von Teilprozesszuständen und eine Anzahl von generierbaren Alarminformationen in Form einer Alarmgruppe zugeordnet werden.

Anschließend wird in Schritt S104 jeder (Teil-)Prozesszustand mit der Summe der generierbaren, d. h. allen in Zusammenhang mit dem betreffenden (Teil-)Prozess generierbaren Alarminformationen korreliert, wobei jedem aus einem Prozesszustand und einer Alarminformation gebildeten Paar ein erster Wert oder ein zweiter Wert als Korrelationswert zugewiesen wird. Erfindungsgemäß erfolgt dabei die Korrelation in Schritt S104 vorzugsweise in Form wenigstens einer Folgealarm-/Konfigurationsmatrix, wie weiter oben bereits ausführlich dargestellt wurde.

Danach wird im Schritt S105 jeder generierbaren Alarminformation eines betreffenden (Teil-)Prozesses ein Abhängigkeitswert zugewiesen, d. h. der jeweilige Alarm wird entweder als Folgealarm gekennzeichnet oder nicht.

Für die nachfolgende Beschreibung wird angenommen, dass der im Rahmen der vorliegenden Erfindung vorgeschlagene Alarm-Hiding-Mechanismus aktiviert ist (S1 = 1 in Figur 4).

In Schritt S106 wird ein gegenwärtiger Prozesszustand oder Teilprozesszustand der Prozessanlage bestimmt.

Der bestimmte Zustand wird durch einen entsprechenden Zustandsbaustein an das Alarmverarbeitungssystem auf Prozessleitebene übermittelt (Schritt S108). Praktisch zeitgleich wird im Schritt S110 auch ein Fehlersignal (vgl. Figur 3) an das Alarmverarbeitungssystem übermittelt. Im Falle eines nicht ordnungsgemäßen Prozesszustands erzeugen in Schritt S112 die Alarmgeber wenigstens einer Alarmgruppe (Figur 2) entsprechende Alarme bzw. Alarminformationen, die in Schritt S114 durch einen zugeordneten Meldebaustein (Figur 1) ebenfalls an das Alarmverarbeitungssystem übertragen werden. Dieses ermittelt in Schritt S116, ob nach Maßgabe des übermittelten Fehlersignals der vorgeschlagene Alarm-Hiding-Mechanismus unter Verwendung der Folgealarm-/Konfigurationsmatrizen Anwendung findet.

Vorliegend sei angenommen, dass dies der Fall ist; somit erfolgt im anschließenden Schritt S118 ein Ausblenden (Maskieren) bestimmter Alarminformationen aufgrund der in den Matrizen enthaltenen Korrelationswerte, wobei nur nicht ausgeblendete Alarminformationen über die Alarmanzeigeeinrichtung zur Anzeige kommen können. Anschließend wird in Schritt S119 überprüft, ob es sich bei den nicht ausgeblendeten Alarminformationen um Folgealarme handelt. Ist dies nicht der Fall (n), werden in Schritt S120 die weder ausgeblendeten noch als Folgealarme eingestuften Alarminformationen zur Anzeige gebracht. Praktisch zeitgleich werden in Schritt S121 alle generierten Alarminformationen in der Speichereinrichtung der Prozessanlage archiviert.

Wird die Abfrage in Schritt S119 bejaht (j), so gelangt das Verfahren nach Schritt S120', wobei nur nicht ausgeblendete Alarminformationen, die zusätzlich nicht als Folgealarme gekennzeichnet sind, zur Anzeige kommen. Praktisch zeitgleich werden dann in Schritt S121 wiederum vorzugsweise alle generierten Alarminformationen in der Speichereinrichtung der Prozessanlage archiviert.

Das Verfahren endet in Schritt S122. Alternativ und in an sich praxisrelevanter Weise kann das Verfahren jedoch im Anschluss an Schritt S120 nach Schritt S106 zurückkehren, was in Figur 5 durch eine gestrichelte Linie angedeutet ist. Entsprechend erfolgt dann in Schritt S106 eine erneute Bestimmung des gegenwärtigen Prozesszustands der Prozessanlage, woraufhin sich das Verfahren beginnend mit Schritt S108 entsprechend wiederholt.

Alternativ ist auch ein Wiederbeginn bei Schritt S102, S104 oder S105 möglich, wenn die Prozessanlage oder Teile davon neu eingerichtet werden.

Auf diese Weise erlaubt die Erfindung das Erkennen von Teilprozesszuständen zum Zweck der Beurteilung der Relevanz von Alarmen in Kombination mit bzw. basierend auf der Korrelation zwischen Teilanlagenzustand und der Summe aller Teilanlagenalarme, wobei diese Korrelation vorteilhafterweise in Form einer Matrix konfiguriert ist. Auf diese Weise ist eine Projektierung der Alarmrelevanz bei der erfindungsgemäßen Prozessanlage ohne System- und Programmierkenntnisse in einfacher Weise möglich.

Darüber hinaus besteht über das Vorsehen von Abhängigkeitswerten für die einzelnen generierbaren Alarminformationen die Möglichkeit, durch Einstufen bestimmter Alarme als Folgealarme das Entstehen kaum beherrschbarer Meldeschwälle zu unterbinden, ohne dass die Anlagensicherheit darunter leiden würde. Auch die Einstufung bestimmter Alarme als Folgealarme ist vorteilhafterweise in Form einer Matrix, insbesondere in Form einer besonderen Ausgestaltung der vorstehend genannten Korrelationsmatrix als Folgealarm-/Konfigurationsmatrix, konfigurierbar. Auf diese Weise bleibt die ebenfalls vorstehend erwähnte einfache Projektierungsmöglichkeit weiterhin erhalten.

Es sei abschließend noch betont, dass trotz der Tatsache, dass vorstehend eine beispielhafte Ausgestaltung der vorliegenden Erfindung beschrieben wurde, bei der sowohl eine relevanzbasierte Maskierung von Alarmen als auch eine abhängigkeitsbasierte Maskierung von Alarmen realisiert wurde, die vorliegende Erfindung keinesfalls auf derartige Ausgestaltungen beschränkt ist, bei der beide Arten der Alarmunterdrückung gemeinsam implementiert sind.

Die vorliegende Erfindung umfasst - wie sich aus dem beigefügten Anspruchsbegehren ergibt - insbesondere auch solche Ausgestaltungen, bei denen nur eine abhängigkeitsbasierte Alarmunterdrückung (Folgealarm-Unterdrückung) implementiert ist.

## Patentansprüche

1. Verfahren zum Betreiben einer Prozessanlage (1), bei der auf Prozessebene (3) eine Anzahl von Alarminformationen (Alarm Ai, Bi, Ci) zum Anzeigen nicht ordnungsgemäßer Betriebsvorgänge der Prozessanlage (1) generiert wird, bei dem
a) eine Anzahl von Prozesszuständen (Zustand Ai, Bi, Ci) der Prozessanlage (1) definiert wird;
b) während des Betriebs der Prozessanlage (1) generierbare Alarminformationen definiert werden;
c) wenigstens einer Anzahl der generierbaren Alarminformationen jeweils zumindest ein erster Wert oder ein zweiter Wert als Abhängigkeitswert zugewiesen wird;
d) jeder Prozesszustand mit der Summe der generierbaren Alarminformationen korreliert wird, wobei jedem aus einem Prozesszustand und einer Alarminformation gebildeten Paar ein erster Wert oder ein zweiter Wert als Korrelationswert zugewiesen wird;
e) ein gegenwärtiger Prozesszustand der Prozessanlage bestimmt wird;
f) in Abhängigkeit von dem bestimmten Prozesszustand diejenigen Alarminformationen nicht zur Anzeige gebracht werden, denen als Korrelationswert der erste Wert zugewiesen wurde oder denen als Abhängigkeitswert der erste Wert zugewiesen wurde, wobei
g) die Korrelation von Prozesszuständen und Alarminformationen in Form wenigstens einer Konfigurationsmatrix (Matrix A, B, C) erfolgt, wobei eine erste Dimension der Konfigurationsmatrix durch die definierten Prozesszustände und eine zweite Dimension der Konfigurationsmatrix durch die generierbaren Alarminformationen (Alarm Ai, Bi, Ci) gebildet wird, wobei die Korrelationswerte die Einträge der Konfigurationsmatrix darstellen, sowie
h) die Abhängigkeitswerte in Form wenigstens einer Folgealarmmatrix angeordnet werden, wobei eine Dimension der Folgealarmmatrix durch die generierbaren Alarminformationen gebildet wird.

2. Verfahren nach Anspruch 1, **dadurch gekennzeichnet, dass** die Folgealarmmatrix Teil der Konfigurationsmatrix ist.

3. Verfahren nach Anspruch 1 oder 2, **dadurch gekennzeichnet, dass** jedem definierten Prozesszustand eine eigene Folgealarmmatrix zugeordnet wird.

4. Verfahren nach einem der Ansprüche 1 bis 3, **dadurch gekennzeichnet, dass** nach Wegfall von Alarminformationen, denen als Abhängigkeitswert der zweite Wert zugewiesen wurde, diejenigen noch anstehenden Alarminformationen zur Anzeige gebracht werden, denen als Abhängigkeitswert der erste Wert zugewiesen wurde.

5. Verfahren nach Anspruch 4, **dadurch gekennzeichnet, dass** die noch anstehenden Alarminformationen in der Reihenfolge ihrer Generierung sequentiell zur Anzeige gebracht werden.

6. Verfahren nach Anspruch 4, **dadurch gekennzeichnet, dass** jeder generierbaren Alarminformation zusätzlich zu oder gemeinsam mit dem Abhängigkeitswert ein Prioritätswert zugeordnet wird und dass die noch anstehenden Alarminformationen in Abhängigkeit von ihrem Prioritätswert sequentiell angezeigt werden.

7. Verfahren nach einem der Ansprüche 1 bis 6, **dadurch gekennzeichnet, dass** eine in Abhängigkeit von dem bestimmten Prozesszustand zeitlich zuerst generierte Alarminformation auch dann zur Anzeige gebracht wird, wenn ihr als Korrelationswert der erste Wert zugewiesen wurde.

8. Verfahren nach einem der Ansprüche 1 bis 7, **dadurch gekennzeichnet, dass** standardmäßig der zweite Wert als Abhängigkeitswert zugewiesen wird.

9. Verfahren nach einem der Ansprüche 2 bis 8, **dadurch gekennzeichnet, dass** in Abhängigkeit von dem bestimmten Prozesszustand zumindest diejenigen Alarminformationen (Alarm Ai, Bi, Ci), denen als Korrelationswert der erste Wert zugewiesen wurde, in einer Speichereinrichtung (9, 10) archiviert werden.

10. Verfahren nach einem der Ansprüche 1 bis 9, **dadurch gekennzeichnet, dass** alle generierten Alarminformationen (Alarm Ai, Bi, Ci) in der Speichereinrichtung (9, 10) archiviert werden.

11. Verfahren nach einem der Ansprüche 1 bis 10, **dadurch gekennzeichnet, dass** der Prozesszustand (Zustand Ai, Bi, Ci) in Schritt e) gemäß Anspruch 1 auf Prozessebene (3) bestimmt und zusammen mit der Summe der generierten Alarminformationen (Alarm Ai, Bi, Ci) zu einer Prozessleitebene (2) der Prozessanlage (1) übertragen wird und dass die Schritte c) und f) gemäß Anspruch 1 in einem Alarmverarbeitungssystem (6) auf der Prozessleitebene (2) durchgeführt werden.

12. Verfahren nach einem der Ansprüche 1 bis 11, **dadurch gekennzeichnet, dass** bei einem Wechsel der Prozessanlage (1) in einen neuen Prozesszustand (Zustand Ai, Bi, Ci) im Zeitpunkt des Wechsels Schritt f) gemäß Anspruch 1 erneut ausgeführt wird, wobei anstehende, generierte Alarminformationen (Alarm Ai, Bi, Ci) in Abhängigkeit von dem neuen Prozesszustand zur Anzeige gebracht werden.

13. Verfahren nach einem der Ansprüche 1 bis 12, **dadurch gekennzeichnet, dass** bei fehlerhafter Bestimmung des Prozesszustands (Zustand Ai, Bi, Ci) in Schritt e) gemäß Anspruch 1 im nachfolgenden Schritt f) gemäß Anspruch 1 auch alle weiteren generierten Alarminformationen (Alarm Ai, Bi, Ci) zur Anzeige gebracht werden.

14. Verfahren nach einem der Ansprüche 1 bis 12, **dadurch gekennzeichnet, dass** bei fehlerhafter Bestimmung des Prozesszustands (Zustand Ai, Bi, Ci) in Schritt e) gemäß Anspruch 1 im nachfolgenden Schritt f) gemäß Anspruch 1 die weiteren generierten Alarminformationen (Alarm Ai, Bi, Ci) in Abhängigkeit von dem zugehörigen Abhängigkeitswert zur Anzeige gebracht werden.

15. Verfahren nach einem der Ansprüche 1 bis 14, **dadurch gekennzeichnet, dass** auf Prozessebene (3) eine Anzahl von Teilprozessen (A, B, C) definiert wird, wobei jedem Teilprozess eine Anzahl von Teilprozesszuständen (Zustand Ai, Bi, Ci) und eine Anzahl von generierbaren Alarminformationen (Alarm Ai, Bi, Ci) in Form einer Alarmgruppe zugeordnet werden, und dass der Schritt c) gemäß Anspruch 1 und/oder die Schritte d) bis f) gemäß Anspruch 1 für jeden Teilprozess (A, B, C) separat ausgeführt werden.

16. Prozessanlage (1) mit einer Anzahl von Alarmgebern (FB01 bis FB09) auf Prozessebene (3), die zum Generieren einer Anzahl von Alarminformationen (Alarm Ai, Bi, Ci) zum Anzeigen nicht ordnungsgemäßer Betriebsvorgänge der Prozessanlage (1) ausgebildet sind, und mit einer Alarmanzeigeeinrichtung (7) zum Anzeigen von Alarminformationen (Alarm Ai, Bi, Ci) sowie mit einem Alarmverarbeitungssystem (6) auf Prozessleitebene (2), das die generierten Alarminformationen (Alarm Ai, Bi, Ci) empfängt, wobei wenigstens einer Anzahl von Alarminformationen zumindest jeweils ein erster Wert oder ein zweiter Wert als Abhängigkeitswert zuweisbar ist, wobei das Alarmverarbeitungssystem (6) in Abhängigkeit von dem Abhängigkeitswert zum Steuern der Alarmanzeigeeinrichtung (7) zum Ausblenden derjenigen Alarminformationen (Alarm Ai, Bi, Ci) ausgebildet ist, denen als Abhängigkeitswert der erste Wert zugewiesen wurde, **dadurch gekennzeichnet, dass** das Alarmverarbeitungssystem (6) für die Alarminformationen (Alarm Ai, Bi, Ci) wenigstens eine Folgealarmmatrix aufweist, wobei eine Dimension der Folgealarmmatrix durch die generierbaren Alarminformationen gebildet ist, wobei die Abhängigkeitswerte die Einträge der Folgealarmmatrix darstellen.

17. Prozessanlage (1) nach Anspruch 16, **dadurch gekennzeichnet, dass** einer Teilgruppe (ABC) der Alarmgeber wenigstens ein Zustandsbaustein (ZA, ZB, ZC) zugeordnet ist, der zum Bestimmen wenigstens eines gegenwärtigen Prozesszustands (Zustand Ai, Bi, Ci) der Prozessanlage (1) aus einer Anzahl definierter Prozesszustände ausgebildet ist, und dass das Alarmverarbeitungssystem (6) dazu ausgebildet ist, ein den bestimmten Prozesszustand repräsentierendes Zustandssignal zu empfangen und jeden definierten Prozesszustand mit der Summe der empfangenen Alarminformationen zu korrelieren, wobei jedem aus einem Prozesszustand und einer Alarminformation gebildeten Paar ein erster Wert oder ein zweiter Wert als Korrelationswert zuweisbar ist, wobei das Alarmverarbeitungssystem (6) in Abhängigkeit von dem Zustandssignal zum Steuern der Alarmanzeigeeinrichtung (7) zum Ausblenden derjenigen Alarminformationen (Alarm Ai, Bi, Ci) ausgebildet ist, denen als Korrelationswert der erste Wert zugewiesen wurde oder denen als Abhängigkeitswert der erste Wert zugewiesen wurde.

18. Prozessanlage (1) nach Anspruch 17, **dadurch gekennzeichnet, dass** das Alarmverarbeitungssystem (6) zum Korrelieren der Prozesszustände (Zustand Ai, Bi, Ci) und der Alarminformationen (Alarm Ai, Bi, Ci) wenigstens eine Konfigurationsmatrix (Matrix A, B, C) aufweist, wobei eine erste Dimension der Konfigurationsmatrix durch die definierten Prozesszustände und eine zweite Dimension der Konfigurationsmatrix durch die generierbaren Alarminformationen gebildet sind, wobei die Korrelationswerte die Einträge der Konfigurationsmatrix darstellen.

19. Computerprogrammprodukt zum Betreiben einer Prozessanlage (1), das Programmcodesequenzen aufweist, die bei Ausführung in einem Prozessleitsystem (5) der Prozessanlage in Abhängigkeit von ermittelten Prozesszustandsdaten der Prozessanlage zum Verarbeiten von auf Prozessebene (3) generierten Alarminformationen (Alarm Ai, Bi, Ci) gemäß einem Verfahren nach einem der Ansprüche 1 bis 13 ausgebildet sind.

## Claims

1. Method for operating a process plant (1), in which a number of alarm notifications (Alarm Ai, Bi, Ci) for indicating non-compliant operating events of the process plant (1) are generated at process level (3), in which
a) a number of process states (State Ai, Bi, Ci) of the process plant (1) are defined;
b) alarm notifications which can be generated during the operation of the process plant (1) are defined;
c) at least a number of the generatable alarm notifications are assigned in each case at least a first value or a second value as a dependency value;
d) each process state is correlated with the totality of the generatable alarm notifications, wherein each pair consisting of a process state and an alarm notification is assigned a first value or a second value as a correlation value;
e) a current process state of the process plant is determined;
f) depending on the determined process state, those alarm notifications to which the first value was assigned as a correlation value or to which the first value was assigned as a dependency value are not indicated, wherein
g) the correlation of process states and alarm notifications takes place in the form of at least one configuration matrix (Matrix A, B, C), wherein a first dimension of the configuration matrix is formed by the defined process states and a second dimension of the configuration matrix is formed by the generatable alarm notifications (Alarm Ai, Bi, Ci), wherein the correlation values represent the entries in the configuration matrix and
h) the dependency values are arranged in the form of at least one secondary-alarm matrix, wherein one dimension of the secondary-alarm matrix is formed by the alarm notifications that can be generated

2. Method according to claim 1, **characterized in that** the secondary-alarm matrix is part of the configuration matrix.

3. Method according to claim 1 or 2, **characterized in that** an individual secondary-alarm matrix is assigned to each defined process state.

4. Method according to one of the claims 1 to 3, **characterized in that** following cessation of alarm notifications to which the second value was assigned as a dependency value, those remaining outstanding alarm notifications to which the first value was assigned as a dependency value are indicated.

5. Method according to claim 4, **characterized in that** the remaining outstanding alarm notifications are indicated sequentially in the sequence of their generation.

6. Method according to claim 4, **characterized in that** each generatable alarm notification is assigned a priority value in addition to or together with the dependency value, and that the remaining outstanding alarm notifications are indicated sequentially depending on their priority value.

7. Method according to one of the claims 1 to 6, **characterized in that** an alarm notification which is generated first relative to time depending on the determined process state is also indicated if it was assigned the first value as a correlation value.

8. Method according to one of the claims 1 to 7, **characterized in that** the second value is assigned as a dependency value by default.

9. Method according to one of the claims 2 to 8, **characterized in that**, depending on the determined process state, at least those alarm notifications (Alarm Ai, Bi, Ci), to which the first value was assigned as a correlation value are archived in a storage entity (9, 10).

10. Method according to one of the claims 1 to 9, **characterized in that** all generated alarm notifications (Alarm Ai, Bi, Ci) are archived in the storage entity (9, 10).

11. Method according to one of the claims 1 to 10, **characterized in that** the process state (State Ai, Bi, Ci) in step e) as per claim 1 is determined at process level (3) and is transferred together with the totality of the generated alarm notifications (Alarm Ai, Bi, Ci) to a process control level (2) of the process plant (1), and that the steps c) and f) as per claim 1 are performed in an alarm processing system (6) at the process control level (2).

12. Method according to one of the claims 1 to 11, **characterized in that** if the process plant (1) changes to a new process state (State Ai, Bi, Ci), step f) according to claim 1 is executed again at the time point of the change, wherein outstanding generated alarm notifications (Alarm Ai, Bi, Ci) are indicated depending on the new process state.

13. Method according to one of the claims 1 to 12, **characterized in that** if the process state (State Ai, Bi, Ci) is incorrectly determined in step e) according to claim 1, all further generated alarm notifications (Alarm Ai, Bi, Ci) are also indicated in the following step f) according to claim 1.

14. Method according to one of the claims 1 to 12, **characterized in that** if the process state (State Ai, Bi, Ci) is incorrectly determined in step e) according to claim 1, the further generated alarm notifications (Alarm Ai, Bi, Ci) are indicated in the following step f) according to claim 1 depending on the associated dependency value.

15. Method according to one of the claims 1 to 14, **characterized in that** a number of sub-processes (A, B, C) are defined at process level (3), wherein each sub-process is assigned a number of sub-process states (State Ai, Bi, Ci) and a number of generatable alarm notifications (Alarm Ai, Bi, Ci) in the form of an alarm group, and that the step c) according to claim 1 and/or the steps d) to f) according to claim 1 are executed separately for each sub-process (A, B, C).

16. Process plant (1) comprising a number of alarm emitters (FB01 to FB09) at process level (3) which are designed to generate a number of alarm notifications (Alarm Ai, Bi, Ci) for indicating non-compliant operating events of the process plant (1), and comprising an alarm indication entity (7) for indicating alarm notifications (Alarm Ai, Bi, Ci), and an alarm processing system (6) which is provided at process control level (2) and receives the generated alarm notifications (Alarm Ai, Bi, Ci), wherein at least a number of alarm notifications can be assigned at least a first value or a second value in each case as a dependency value, wherein the alarm processing system (6) is designed to control the alarm indication entity (7) depending on the dependency value such that those alarm notifications (Alarm Ai, Bi, Ci) which were assigned the first value as a dependency value are masked, **characterized in that** the alarm processing system (6) for the alarm notifications (Alarm Ai, Bi, Ci) features at least one secondary-alarm matrix, wherein one dimension of the secondary-alarm matrix is formed by the generatable alarm notifications, wherein the dependency values represent the entries in the secondary-alarm matrix.

17. Process plant (1) according to claim 16, **characterized in that** a sub-group (ABC) of the alarm emitters is assigned at least one state component (ZA, ZB, ZC) which is designed to determine at least one current process state (State Ai, Bi, Ci) of the process plant (1) from a number of defined process states, and that the alarm processing system (6) is designed to receive a state signal which represents the determined process state and to correlate each defined process state with the totality of the received alarm notifications, wherein each pair consisting of a process state and an alarm notification can be assigned a first value or a second value as a correlation value, wherein the alarm processing system (6) is designed to control the alarm indication entity (7) depending on the state signal such that those alarm notifications (Alarm Ai, Bi, Ci) to which the first value was assigned as a correlation value or to which the first value was assigned as a dependency value are masked.

18. Process plant (1) according to claim 17, **characterized in that** the alarm processing system (6) features at least one configuration matrix (Matrix A, B, C) for correlating the process states (State Ai, Bi, Ci) and the alarm notifications (Alarm Ai, Bi, Ci), wherein a first dimension of the configuration matrix is formed by the defined process states and a second dimension of the configuration matrix is formed by the generatable alarm notifications, wherein the correlation values represent the entries in the configuration matrix.

19. Computer program product for operating a process plant (1), featuring program code sequences which are designed, when executed in a process control system (5) of the process plant and depending on determined process state data of the process plant, to process alarm notifications (Alarm Ai, Bi, Ci), these being generated at process level (3), in accordance with a method according to one of the claims 1 to 13.

## Revendications

1. Procédé pour faire fonctionner une installation ( 1 ) de processus, dans lequel on produit sur le plan ( 3 ) de processus un certain nombre d'informations ( Alarm Ai, Bi, Ci ) d'alerte pour l'indication d'opérations de fonctionnement incorrectes de l'installation ( 1 ) de processus, dans lequel
a) on définit un certain nombre d'états ( état Ai, Bi, Ci ) de processus de l'installation ( 1 ) de processus,
b) on définit des informations d'alerte pouvant être produites pendant le fonctionnement de l'installation ( 1 ) de processus,
c) on affecte respectivement au moins une première valeur ou une deuxième valeur en tant que valeur de dépendance à un certain nombre des informations d'alerte pouvant être produites,
d) on met chaque état de processus en corrélation avec la somme des informations d'alerte pouvant être produite, une première valeur ou une deuxième valeur étant affectée comme valeur de corrélation à chaque paire formée d'un état de processus et d'une information d'alerte,
e) on détermine un état de processus présent de l'installation de processus,
f) en fonction de l'état de processus déterminé on n'indique pas les informations d'alerte auxquelles on a affecté la première valeur comme valeur de corrélation ou auxquelles on a affecté la première valeur comme valeur de dépendance, dans lequel
g) la corrélation d'états de processus et d'informations d'alerte s'effectue sous la forme d'au moins une matrice ( matrice A, B, C ) de configuration, une première dimension de la matrice de configuration étant formée par les états de processus définis et une deuxième dimension de la matrice de configuration par les informations ( Alarm Ai, Bi, Ci ) d'alerte pouvant être produites, les valeurs de corrélation représentant les entrées de la matrice de configuration, ainsi que
h) les valeurs de dépendance sont disposées sous la forme d'au moins une matrice d'alerte de suite, une dimension de la matrice d'alerte de suite étant formée par les informations d'alerte pouvant être produites.

2. Procédé suivant la revendication 1, **caractérisé en ce que** la matrice d'alerte de suite est une partie de la matrice de configuration.

3. Procédé suivant la revendication 1 ou 2, **caractérisé en ce qu'**une matrice d'alerte de suite propre est affectée à chaque état de processus défini.

4. Procédé suivant l'une des revendications 1 à 3, **caractérisé en ce qu'**après suppression d'informations d'alerte auxquelles la deuxième valeur a été affectée comme valeur de dépendance, on indique les informations d'alerte encore existantes auxquelles la première valeur a été affectée comme valeur de dépendance.

5. Procédé suivant la revendication 4, **caractérisé en ce que** l'on indique séquentiellement dans la succession de leur production les informations d'alerte encore existantes.

6. Procédé suivant la revendication 4, **caractérisé en ce que** l'on affecte une valeur de priorité en plus ou conjointement à la valeur de dépendance à chaque information d'alerte pouvant être produite et **en ce que** l'on indique séquentiellement les informations d'alerte encore existantes en fonction de leur valeur de priorité.

7. Procédé suivant l'une des revendications 1 à 6, **caractérisé en ce que** l'on indique aussi une information d'alerte produite d'abord dans le temps en fonction de l'état du processus déterminé lorsque la première valeur lui a été affectée comme valeur de corrélation.

8. Procédé suivant l'une des revendications 1 à 7, **caractérisé en ce que** l'on affecte de manière normalisée la deuxième valeur comme valeur de dépendance.

9. Procédé suivant l'une des revendications 2 à 8, **caractérisé en ce que** en fonction de l'état du processus déterminé, on archive dans un dispositif ( 9, 10 ) de mémoire au moins les informations ( Alarm Ai, Bi, Ci ) d'alerte auxquelles la première valeur a été affectée comme valeur de corrélation.

10. Procédé suivant l'une des revendications 1 à 9, **caractérisé en ce que** l'on archive dans le dispositif ( 9, 10 ) de mémoire toutes les informations ( Alarm Ai, Bi, Ci ) d'alerte produites.

11. Procédé suivant l'une des revendications 1 à 10, **caractérisé en ce que** l'on détermine l'état ( état Ai, Bi, Ci ) de processus au stade e ) suivant la revendication 1 sur le plan ( 3 ) de processus et on le transmet ensemble avec la somme des informations ( Alarm Ai, Bi, Ci ) d'alerte produites à un plan ( 2 ) de conduite de processus de l'installation ( 1 ) de processus et **en ce que** l'on effectue les stades c ) et f ) suivant la revendication 1 dans un système ( 6 ) de traitement d'alerte sur le plan ( 2 ) de conduite de processus.

12. Procédé suivant l'une des revendications 1 à 11, **caractérisé en ce que**, lorsque l'installation ( 1 ) de processus passe dans un état ( état Ai, Bi, Ci ) de processus nouveau, on effectue à nouveau à l'instant du passage le stade f ) suivant la revendication 1, des informations ( Alarm Ai, Bi, Ci ) d'alerte produites existantes étant indiquées en fonction de l'état de processus nouveau.

13. Procédé suivant l'une des revendications 1 à 12, **caractérisé en ce que**, si la détermination de l'état ( état Ai, Bi, Ci ) du processus est défectueuse au stade e ) suivant la revendication 1, on indique dans le stade f ) suivant la revendication 1 également toutes les autres informations ( Alarm Ai, Bi, Ci ) d'alerte produites.

14. Procédé suivant l'une des revendications 1 à 12, **caractérisé en ce que**, si la détermination de l'état ( état Ai, Bi, Ci ) du processus est défectueuse au stade e ) suivant la revendication 1, on indique dans le stade f ) suivant la revendication 1 les autres informations ( Alarm Ai, Bi, Ci ) d'alerte produites en fonction de la valeur de dépendance associée.

15. Procédé suivant l'une des revendications 1 à 14, **caractérisé en ce qu'**on définit sur la plan ( 3 ) de processus un certain nombre de sous-processus ( A, B, C ) en associant à chaque sous-processus un nombre d'états ( état Ai, Bi, Ci ) de sous-processus et un nombre d'informations alarme ( Alarm Ai, Bi, Ci ) d'alerte pouvant être produites sous la forme d'un groupe d'alerte et **en ce que** l'on effectue le stade c ) suivant la revendication 1 et/ou les stades d ) à f ) suivant la revendication 1 séparément pour chaque sous-processus ( A, B, C ).

16. Installation ( 1 ) de processus comprenant un certain nombre de donneurs ( FB01 à FB09 ) d'alerte sur un plan ( 3 ) de processus, qui sont constitués pour produire un nombre d'informations ( Alarm Ai, Bi, Ci ) d'alerte pour l'indication d'opérations de fonctionnement incorrectes de l'installation ( 1 ) de processus et comprenant un dispositif ( 7 ) d'indication d'alerte pour indiquer des informations ( Alarm Ai, Bi, Ci ) d'alerte, ainsi qu'un système ( 6 ) de traitement d'alerte sur un plan ( 2 ) de conduite de processus, qui reçoit les informations ( Alarm Ai, Bi, Ci ) d'alerte produites, au moins respectivement une première valeur ou une deuxième valeur pouvant être affectée comme valeur de dépendance à au moins un nombre d'informations d'alerte, le système ( 6 ) de traitement d'alerte étant constitué, en fonction de la valeur de dépendance pour la commande du dispositif ( 7 ) d'indication d'alerte, pour supprimer les informations ( Alarm Ai, Bi, Ci ) d'alerte auxquelles la première valeur, a été affectée comme valeur de dépendance, **caractérisé en ce que** le système ( 6 ) de traitement d'alerte a au moins une matrice d'alerte de suite pour les informations ( Alarm Ai, Bi, Ci ) d'alerte, une dimension de la matrice d'alerte de suite étant formée par les informations d'alerte pouvant être produites, les valeurs de dépendance représentant les entrées de la matrice d'alerte de suite.

17. Installation ( 1 ) de processus suivant la revendication 16, **caractérisée en ce que** au moins un module ( ZA, ZB, ZC ) d'état est affecté à un groupe ( A, B, C ) partiel des donneurs d'alerte, module qui est formé pour la détermination d'au moins un état ( état Ai, Bi, Ci ) de processus présent de l'installation ( 1 ) de processus parmi un certain nombre d'états de processus définis et **en ce que** le système ( 6 ) de traitement d'alerte est constitué pour recevoir un signal d'état représentant l'état de processus déterminé et pour corréler chaque état de processus défini à la somme des informations d'alerte reçues, une première valeur ou une deuxième valeur pouvant être affectée comme valeur de corrélation à chaque paire formée d'un état de processus et d'une information d'alerte, le système ( 6 ) de traitement d'alerte étant formé pour, en fonction du signal d'état, commander le dispositif ( 7 ) d'indication d'alerte pour supprimer les informations ( Alarm Ai, Bi, Ci ) d'alerte auxquelles la première valeur a été affectée comme valeur de corrélation ou auxquelles la première valeur a été affectée comme valeur de dépendance.

18. Installation ( 1 ) de processus suivant la revendication 17, **caractérisée en ce que** le système ( 6 ) de traitement d'alerte a, pour la corrélation des états ( état Ai, Bi, Ci ) de processus et des informations ( Alarm Ai, Bi, Ci ) d'alerte, au moins une matrice ( matrice A, B, C ) de configuration, une première dimension de la matrice de configuration étant formée par les états de processus définis et une deuxième dimension de la matrice de configuration par les informations d'alerte pouvant être produites, les valeurs de corrélation représentant les entrées de la matrice de corrélation.

19. Produit de programme d'ordinateur pour faire fonctionner une installation ( 1 ) de processus qui a des séquences de code de programme qui sont, dans l'exécution dans un système ( 5 ) de conduite de processus de l'installation de processus en fonction de données d'état de processus déterminées de l'installation de processus, formées pour le traitement d'informations ( Alarm Ai, Bi, Ci ) d'alerte produites sur un plan ( 3 ) de processus selon un procédé suivant l'une des revendications 1 à 13.
